# EUROPÄISCHE PATENTANMELDUNG

(11) **EP 4 826 602 A2**
(43) Veröffentlichungstag der Anmeldung: **21.10.2026**
(21) Anmeldenummer: 26199693.8
(22) Anmeldetag: 13.06.2024
(51) Int. Cl.: G06N 10/40

(54) **VERFAHREN ZUM AUSLESEN DER ZUSTÄNDE MEHRERER QUBITS, INSBESONDERE SUPRALEITENDER QUBITS UND/ODER SPIN-QUBITS, AUSLESEVORRICHTUNG UND QUANTENCOMPUTER**

(30) Priorität: 23.06.2023 DE 102023116649
(62) Dokumentnummer(n) der früheren Anmeldung(en) nach Art. 76 EPÜ: 24734825.3 / 4 732 201
(71) Anmelder: Forschungszentrum Jülich GmbH, 52428 Jülich (DE)
(72) Erfinder: Grewing, Christian, 52428 Julich (DE); van Waasen, Stefan, 41836 Huckelhoven (DE); Schlosser, Mario, 52457 Aldenhoven (DE); van den Boom, Johannes, 58300 Wetter (DE); Jokhovets, Lioubov, 52351 Duren (DE)
(74) Vertreter: Paul & Albrecht Patentanwälte PartG mbB

(57) **Zusammenfassung**

Die vorliegende Erfindung betrifft ein Verfahren zum Auslesen der Zustände mehrerer Qubits (Q1-Qn), insbesondere supraleitender Qubits und/oder Spin-Qubits , wobei den Qubits (Q1-Qn) für das Auslesen der Zustände das gleiche Probensignal (7) über eine gemeinsame Probenleitung (8) zugeführt wird, und wobei jedem Qubit (Q1-Qn) eine eigene, bevorzugt einen Antwort-Resonator (4) aufweisende Antwort-Schaltung (5) zugeordnet ist, und wobei in Reaktion auf das zugeführte Probensignal (7) über die jeweilige Antwort-Schaltung (5) ein Antwortsignal (20) mit einer Information über den Zustand des jeweiligen Qubits (Q1-Qn)ausgegeben wird, wobei das Antwortsignal (20) wenigstens eines Qubits (Q1-Qn) gegenüber dem Antwortsignal (20) wenigstens eines weiteren Qubits (Q1-Qn) verzögert wird. Darüber hinaus betrifft die Erfindung eine Auslesevorrichtung und einen Quantencomputer.

## Beschreibung

Die Erfindung betrifft ein Verfahren zum Auslesen der Zustände mehrerer Qubits, insbesondere supraleitender Qubits und/oder Spin-Qubits, wobei den Qubits für das Auslesen der Zustände das gleiche Probensignal über eine gemeinsame Probenleitung zugeführt wird, und wobei jedem Qubit eine eigene, bevorzugt einen Antwort-Resonator aufweisende Antwort-Schaltung zugeordnet ist, und wobei in Reaktion auf das zugeführte Probensignal über die jeweilige Antwort-Schaltung ein Antwortsignal mit einer Information über den Zustand des jeweiligen Qubits ausgegeben wird. Darüber hinaus betrifft die Erfindung eine Auslesevorrichtung und einen Quantencomputer.

Zwei wesentliche Anforderungen für die Realisierung eines Quantencomputers sind einerseits die Fähigkeit ein Register von Qubits manipulieren und andererseits deren Zustand auslesen zu können. Derzeit können Register von drei bis sieben supraleitendenden Qubits manipuliert werden und es ist möglich, die mehreren Qubits gleichzeitig auszulesen. Dabei kann entweder ein gemeinsamer Auslese-Resonator für die mehreren Qubits verwendet werden, wie es in dem Aufsatz " Preparation and measurement of three-qubit entanglement in a superconducting circuit" von DiCarlo, L., Reed, M., Sun, L. et al., Nature 467, 574-578 (2010). https://doi.org/10.1038/nature09416 beschrieben ist, oder es wird dedizierte Elektronik für jedes Qubit genutzt, insbesondere jeweils ein Auslese-Resonators für jedes Qubit, wie es aus dem Aufsatz "Generation of three-qubit entangled states using superconducting phase qubits" von Neeley, M., Bialczak, R., Lenander, M. et al, Nature 467, 570-573 (2010) https://doi.org/10.1038/nature09418 hervorgeht.

In dem Aufsatz " Two-Qubit State Tomography Using a Joint Dispersive Readout" von s. Filipp et al., PRL 102, 200402 (2009) ist ferner das gemeinsame, gleichzeitige Auslesen von zwei supraleitender Qubits beschrieben. Beiden Qubits ist dabei eine gemeinsame Antwort-Schaltung in Form eines mit beiden Qubits verbundenen Antwort-Resonators zugeordnet.

Für den Bereich der Quantenschaltungen wäre ein Ausleseschema erstrebenswert, dessen Komplexität nicht proportional mit der Anzahl der beteiligten Qubits anwächst und welches das Auslesen auch von mehr als zwei Qubits ermöglicht.

Es ist ein Ansatz bekannt, bei dem mehrere Qubits unter Nutzung von Frequenzmultiplexing (FDM) parallel ausgelesen werden. Dies ist in den Aufsätzen " Frequency Division Multiplexing Readout and Simultaneous Manipulation of an Array of Flux Qubits" von M. Jerger et al., arXiv: 1205.6375v2 [quant-ph] vom 12. Juli 2012 sowie "Multiplexed readout of four qubits in 3D circuit QED architecture using broadband Josephson parametric amplifier" von S. Kundu et al., Appl. Phys. Lett 114, 172601 (2019) https://doi.org/10.1063/1.5089729 beschrieben. Der Vorteil dieser Technik besteht darin, dass sie - im Prinzip - auf eine beliebige Anzahl von Qubits skalierbar ist. Die Architektur dieses Ansatzes umfasst Antwort-Resonatoren mit verschiedenen Frequenzen für die einzelnen Qubits, die alle über eine einzige, gemeinsame Probenleitung adressiert werden, welche den Qubit-Chip auch mit einer Auslese-Elektronik verbindet. Die Nutzung der unterschiedlichen Frequenzen und entsprechenden Antwort-Resonatoren macht es möglich, im parallelen bzw. gleichzeitigen Ausleseszenario die Antwortsignale der verschiedenen Qubits voneinander zu unterscheiden. Die gemeinsame Probenleitung ist durch eine Mikrowellen-Übertragungs-Leitung gegeben. Dieser frequenzselektive Ansatz bedarf zum Auslesen von N Qubits auch N individueller Mikrowellenfrequenzen. Ein schneller Digital-zu-Analog-Wandler (DAC) synthetisiert dabei N spezifische sub-GHz Basisband Signaltöne (englisch: signal tones) für die individuellen Qubits, so viele Töne wie innerhalb der verfügbaren Bandbreite erwünscht. Anschließend werden diese Töne unter Nutzung einer Referenz-Mikrowellenquelle und Zwei-Quadratur(IQ)-Mixers auf die gewünschte Antwort-Resonatorfrequenz von einigen GHz hochgemischt. Das erzeugte Multi-Ton Probensignal wird über eine auf dem Chip befindliche Probenleitung gesendet, die mit den einzelnen Qubit-Antwort-Resonatoren mit unterschiedlichen Frequenzen gekoppelt ist. Das übertragene Signal wird wieder auf Basisband Frequenzen runtergemischt, mit anderen Worten demoduliert, und mittels eines schnellen Analog-zu-Digital-Wandler (ADC) digitalisiert. Dann werden die Amplitude und Phasenänderung jedes übertragenen Tones aus der Quadratur I und Q unter Nutzung einer schnellen Fouriertransformation erhalten. Die Quantenmanipulation und das Auslesen von N Qubits erfordern nach diesem Schema die Erzeugung von N Mikrowellen-Tönen zusätzlich zu den Auslese-Tönen.

An dem FDM-basierten Ansatz wird teilweise als nachteilig erachtet, dass ein Verstärker mit großer Bandbreite und in Konsequenz einem geringen Signal-Rausch-Verhältnis (SNR) erforderlich ist. Für das gleichzeitige Auslesen mehrerer Qubits ist ein Multi-Frequenz-Probensignal, das alle Antwort-Resonatoren bzw. deren Resonanz-Räume adressiert, zu generieren. Die Frequenzen, die mit einem Abstand von 70 bis 100 MHz gewählt werden, sollten in ein Basisband gruppiert werden. Dies resultiert in das verhältnismäßig breite Basisband und niedrige Signal-Rausch-Verhältnis. Eine Basis-Bandbreite von ~ 1 GHz ist erforderlich, um ein Auslese-Frequenzmultiplexing von sieben Qubits zu implementieren.

Das niedrige Signal-Rausch-Verhältnis erhöht die Anzahl von Auslese-Zyklen zum Erhalt von verlässlichen Informationen über die Zustände der Qubits.

Es ist eine Aufgabe der vorliegenden Erfindung, ein Verfahren zum Auslesen mehrerer Qubits der eingangs genannten Art anzugeben, dessen Komplexität nicht proportional mit der Anzahl der beteiligten Qubits anwächst und das sich gleichzeitig durch ein verbessertes Signal-Rausch-Verhältnis auszeichnet.

Diese Aufgabe wird bei einem Verfahren zum Auslesen der Zustände mehrerer Qubits der eingangs genannten Art dadurch gelöst, dass das Antwortsignal wenigstens eines Qubits gegenüber dem Antwortsignal wenigstens eines weiteren Qubits verzögert wird.

In zweckmäßiger Ausgestaltung des erfindungsgemäßen Verfahrens ist vorgesehen, dass die Verzögerung des Antwortsignals des wenigstens einen Qubits mit wenigstens einer der Antwort-Schaltung des wenigstens einen Qubits zugeordneten und/oder insbesondere direkt nachgeschalteten Verzögerungseinrichtung erzielt wird.

Gegenstand der Erfindung ist auch eine Auslesevorrichtung zur Durchführung des erfindungsgemäßen Ausleseverfahrens, umfassend mehrere bevorzugt einen Antwort-Resonator aufweisende Antwort-Schaltungen, die jeweils mit einem Qubit verbunden oder verbindbar sind, und wenigstens eine Verzögerungseinrichtung, die wenigstens einer Antwort-Schaltung zugeordnet und/oder insbesondere direkt nachgeschaltet ist und ein von der wenigstens einen Antwort-Schaltung ausgegebenes Antwortsignal, das eine Information über den Zustand eines Qubits enthält, verzögern kann.

Der Kerngedanke der vorliegenden Erfindung besteht mit anderen Worten darin, für das Auslesen der Zustände mehrerer Qubits ein zeitgemultiplextes Ausleseschema zu nutzen. Dies macht es möglich, auf die Nutzung unterschiedlicher Frequenzen für verschiedene Qubits und Antwort-Resonatoren verschiedener Frequenzen für die verschiedenen Qubits zu verzichten. Es kann ein gemeinsames Probensignal für die mehreren Qubits genutzt werden, welches im Vergleich zu dem im Rahmen des FDM-basierten Ansatzes erforderlichen Probensignal deutlich schmalbandiger ist. Es kann ein einziger Mikrowellen-Ton oder das gleiche schmale Spektrum für alle Qubits zum Einsatz kommen und allen Qubits können Antwort-Resonatoren mit der gleichen Frequenz zugeordnet sein. Die Unterscheidung der Antwortsignale nach den einzelnen Qubits erfolgt erfindungsgemäß nicht mittels unterschiedlicher Frequenzen, sondern durch das Zeitmultiplexing. Individuelle, für die verschiedenen Qubits vorgesehene zeitliche Verzögerungen ermöglichen es, die von verschiedenen Qubits stammenden Antwortsignale mit der Zustandsinformation zu separieren, dies auch in einem gemeinsamen Antwortsignal, zu welchem die mehreren von den verschiedenen Qubits stammenden einzelnen Antwortsignale zweckmäßiger Weise zusammengefast werden, bevor sie eine Ausleseeinrichtung erreichen. Die Antwortsignale werden erfindungsgemäß also nicht im Frequenz-, sondern im Zeitraum separiert oder auseinandergehalten, um sie den einzelnen Qubits zuordnen zu können.

Unter Nutzung der Erfindung wird es möglich, die Bandbreite der analogen Kette (englisch: chain) beispielsweise auf bis zu 10 MHz zu reduzieren. Dies entspricht verglichen mit der Bandbreite von 1 GHz des FDM-basierten Ansatzes einer Reduktion um den Faktor 100. Mit der erfindungsgemäßen Vorgehensweise kann auch die Echtzeit-Verarbeitungstechnik vereinfacht werden, da sie sehr gut für eine Verarbeitung in der Zeitdomäne, etwa in einem FPGA (Field Programmable Gate Array), geeignet ist. Durch die Erfindung erfolgt - verglichen mit dem FDM-Ansatz - praktisch eine Verschiebung aus der nicht gut für FPGAs geeigneten Frequenzdomäne in die Zeitdomäne, da alle Antworten die gleiche Frequenz bzw. zumindest näherungsweise das gleiche schmale Frequenzspektrum haben.

Auch kann die Messzeit reduziert werden, da infolge der Niedrig-Rausch-Antworten (englisch: low noise responses) verlässliche Messungen erhalten werden. Es sind nur wenige Messzyklen für die Statistik erforderlich, was ebenfalls eine Reduktion der Messzeit ermöglicht.

Es wird ein im Vergleich mit dem Stand der Technik, insbesondere dem FDM-Ansatz, höheres Signal-Rausch-Verhältnis erzielt. Gleichzeitig kann einfachere Hardware genutzt werden. Mit dem erfindungsgemäßen Verfahren und der erfindungsgemäßen Auslesevorrichtung können mehr als zwei Qubits, beispielsweise acht Qubits oder mehr als 8 Qubits, ausgelesen werden.

Zweckmäßiger Weise gilt, dass für die Qubits separate Antwort-Resonatoren vorgesehen sind bzw. genutzt werden. Es kann insbesondere für jedes Qubit ein eigener Antwort-Resonator vorgesehen sein bzw. genutzt werden.

Die Antwortsignale werden in der Regel einen zeitlichen Verlauf aufweisen. Man kann auch sagen, dass sie zeitvariabel sind. Sie können, wie angemerkt, durch Wavelets gegeben sein oder solche umfassen.

Zweckmäßiger Weise erfolgt die erfindungsgemäße Verzögerung des Antwortsignals des wenigstens einen Qubits derart, dass der zeitliche Verlauf des Antwortsignales aufrechterhalten bleibt. Mit anderen Worten liegt nach der Verzögerung des Antwortsignals, insbesondere nachdem das bzw. das jeweilige Antwortsignal wenigstens eine Verzögerungseinrichtung durchlaufen hat, weiterhin ein zeitvariables Antwortsignal vor. Dies im Unterschied zu einem der Anmelderin bekannten alternativen Verfahren, bei dem einzelne Werte, welche einen Qubit-Zustand repräsentieren, in Abtast- und Haltemodule überführt und dort als statische Werte gehalten werden.

Im Rahmen der Erfindung wird zweckmäßiger Weise ein gemeinsames Probensignal für alle Qubits, z.B. von einer Probensignalerzeugungseinrichtung ausgesendet und den mehreren Qubits zugeführt und nicht nacheinander mehrere Probensignale für die mehreren Qubits ausgesendet, welche die Qubits zu verschiedenen Zeiten erreichen. Zweckmäßiger Weise gilt, dass das Probensignal bei den Antwort-Schaltungen der mehreren Qubits, insbesondere deren Antwort-Resonatoren, gleichzeitig ankommt. Die erfindungsgemäße Auslesevorrichtung ist in vorteilhafter Weiterbildung entsprechend ausgebildet.

Dies kann beispielsweise realisiert sein, indem das Probensignal von einer zentralen Probensignalerzeugungseinrichtung aus über die gemeinsame Probenleitung in Richtung der mehreren Qubits geführt wird, wobei von der gemeinsamen Probenleitung, z.B. endseitig, mehrere Abzweigungsleitungen abgehen, von denen jeweils eine zu einem Qubit führt. Die Anordnung ist dabei zweckmäßiger Weise derart getroffen, dass der Weg, den das Probensignal von der Probensignalerzeugungseinrichtung zu dem jeweiligen Qubit bzw. dessen Antwort-Resonator zurücklegen muss, für alle Qubits gleich lang ist, um die gleichzeitige Ankunft zu gewährleisten.

Durch das gleichzeitige Zuführen des Probensignals zu allen Qubits kann eine geringere Messzeit erzielt werden, als es bei einem Auslesen nacheinander Qubit für Qubit, bei dem das Probensignal den Qubits nacheinander zugeführt wird, der Fall wäre.

Die Erfindung hat sich besonders für Spin-Qubits und/oder supraleitende Qubits, insbesondere Flux-Qubits, bewährt. Sie kann aber prinzipiell auch für andere Arten von Qubits genutzt werden.

Die mehreren Qubits können in einem Array angeordnet sein. Sie können eine Qubit-Anordnung bilden bzw. Teil einer solch sein. In der Regel befinden sie sich auf einem Chip, der auch als Qubit-Chip bezeichnet werden kann.

Im Rahmen der Erfindung erfolgt bevorzugt ein dispersives Auslesen der Qubit-Zustände. Dies bedeutet insbesondere bzw. schließt insbesondere mit ein, dass die Qubit-Zustände durch das Auslesen nicht zerstört werden.

Das Probensignal kann z.B. ein pulsförmiges Signal sein oder wenigstens einen Signalpuls umfassen.

Das Probensignal kann in Form eines Wavelets vorliegen oder wenigstens ein solches umfassen. Ein Wavelet ist eine wellenartige Oszillation mit einer Amplitude beginnend mit Null, einem Amplitudenanstieg und einem anschließenden Amplitudenabfall zurück auf Null.

Insbesondere gilt, dass das Probensignal ein pulsförmiges Signal ist, das mit einem Digital-Analog-Konverter (DAC) synthetisiert und dann auf Mikrowellen-Frequenzen hochkonvertiert wird, insbesondere durch analoges Mischen mit einem insbesondere lokalen Hochfrequenzoszillator. Das Probensignal kann auch direkt unter Nutzung eines Hochfrequenz-Digital-Analog-Wandlers generiert werden.

Alternativ oder zusätzlich können die Qubit-Antwortsignale jeweils durch ein pulsförmiges Signal gegeben sein oder wenigstens einen Signalpuls umfassen. Die Antwortsignale können in Form von Wavelets vorliegen oder wenigstens ein solches umfassen.

Ist das Probensignal pulsförmig bzw. umfasst einen oder mehrere Probenpulse, gilt bevorzugt, dass die Pulsdauer im Bereich von 1 Nanosekunde bis 200 Nanosekunden liegt. Es kann vorgesehen sein, dass die Pulsdauer im Bereich von 100 Nanosekunden und 200 Nanosekunden liegt.

Kurze Pulsdauern ermögliche insbesondere eine geringere Messzeit. Mit kürzeren Pulsdauern geht jedoch eine größere Bandbreite einher, was wiederum das Signal-zu-Rausch-Verhältnis etwas verschlechtern kann. Es besteht somit ein Trade-Off und es könne je nach Anwendungsfall besonders geeignete Werte gewählt werden.

In weiterer vorteilhafter Ausgestaltung ist vorgesehen, dass das Probensignal eine Bandbreite im Bereich von einigen MHz auszeichnet. Es kann beispielsweise eine Bandbreite im Bereich von 5 MHz bis 10 MHz aufweisen.

Die erfindungsgemäß vorgesehene zeitliche Verzögerung des Antwortsignals bzw. der Antwortsignale kann mittels einer oder mehreren geeigneten Verzögerungseinrichtungen realisiert werden. Bevorzugt ist die Verzögerungseinrichtung bzw. sind die Verzögerungseinrichtungen derart ausgebildet und/oder eingerichtet, dass sie ein zeitvariables Antwortsignal unter Aufrechterhaltung seines zeitlichen Verlaufs verzögern können. Dann weist ein zeitvariables Antwortsignal auch nach Durchlaufen einer oder mehrerer Verzögerungseinrichtungen noch seinen zeitlichen Verlauf auf. Es erfolgt eine Verzögerung unter Aufrechterhaltung des zeitkontinuierlichen Charakters.

Auch kann vorgesehen sein, dass die Verzögerungseinrichtung ausgebildet und/oder eingerichtet ist bzw. die Verzögerungseinrichtungen ausgebildet und/oder eingerichtet sind, um dem jeweiligen Antwortsignal eine nicht zeitdiskrete Verzögerung aufzuerlegen.

In weiterer zweckmäßiger Ausgestaltung gilt, dass die bzw. die jeweilige Verzögerungseinrichtung eine feste Verzögerung bewirkt. Die Verzögerung kann dann nicht verändert werden. Die bzw. die jeweilige Verzögerungseinrichtung ist insbesondere nicht von außen steuerbar, was die Länge der von dieser jeweils implementierten Verzögerung angeht.

Ferner sollte bekannt sein, für welches Qubit welche Verzögerung implementiert ist. Dies insbesondere, damit die Zustandsinformationen der verschiedenen Qubits, insbesondere in einem nach der Verzögerung durch Aufsummierung erhaltenen gemeinsamen Antwortsignal, sicher auseinandergehalten werden können.

Die wenigstens eine Verzögerungseinrichtung kann ferner in bevorzugter Weiterbildung ausgebildet sein, um bei Temperaturen von 1 K und weniger, bevorzugt von 200 mK und weniger, betrieben zu werden. Sie kann in einem für den Niedertemperaturbetrieb vorgesehenen und ausgestalteten Bereich der Auslesevorrichtung angeordnet sein.

Weiterhin kann gelten, dass die wenigstens eine Verzögerungseinrichtung nicht triggerbar ist bzw. im Rahmen des erfindungsgemäßen Verfahrens nicht getriggert wird.

Die Verzögerung des bzw. der Antwortsignale kann ohne Zwischenspeichern erzielt werden. Entsprechend kann vorgesehen sein, dass die eine oder die mehreren Verzögerungseinrichtungen nicht zur Zwischenspeicherung der von den verschiedenen Qubits stammenden Antwortsignale ausgebildet und/oder eingerichtet sind.

Beispielsweise sind bzw. werden unterschiedlich lange Laufwege für die Antwortsignale vorgesehen bzw. implementiert, um sie zeitlich zueinander zu " versetzen". So kann eine Verzögerung eines Antwortsignals gegenüber einem anderen Antwortsignal insbesondere durch eine längeren " Laufweg" bzw. Übertragungsweg realisiert sein, etwa mittels einer zusätzlichen elektrischen Leitung bzw. eines zusätzlichen elektrischen Leitungsabschnitts insbesondere in der Schaltung. Mit anderen Worten kann für ein Antwortsignal wenigstens eines Qubits eine zusätzliche Leiterbahn oder ein zusätzlicher Leiterbahnabschnitt bzw. eine im Vergleich längere Leiterbahn bzw. ein im Vergleich längerer Leiterbahnabschnitt vorgesehen sein, damit dieses Antwortsignal - im Vergleich zu einem Antwortsignal eines anderen Qubits - einen längeren Weg in der Schaltung durchlaufen muss und zeitlich nach hinten verschoben wird.

Leiterbahnen bzw. Leiterbahnabschnitte unterschiedlicher Länge stellen insbesondere ein Beispiel für passive Verzögerungseinrichtungen dar. Diese bieten den Vorteil, dass sie keine zusätzliche Wärme in den Niedertemperaturbereich einbringen.

Es können auch eine oder mehrere aktive Verzögerungseinrichtungen genutzt werden. Eine aktive Verzögerungseinrichtung kann z.B. wenigstens eine R-C-Komponente und wenigstens einen Verstärker aufweisen. Auch bezüglich aktiver Verzögerungseinrichtungen gilt zweckmäßiger weise, dass diese nicht (von außen) ansteuerbar sind.

Wenigstens eine R-C-Komponente und wenigstens ein Verstärker können jeweils ein Verzögerungsmodul einer Verzögerungseinrichtung bilden und eine Verzögerungseinrichtung kann auch zwei oder mehr solcher Module umfassen. In Weiterbildung kann dann ferner vorgesehen sein, dass wenigstens zwei Verzögerungseinrichtungen sich hinsichtlich der Anzahl ihrer Verzögerungsmodule unterscheiden.

Es ist möglich, dass alle Antwortsignale unterschiedlich stark verzögert werden. Die erfindungsgemäße Auslesevorrichtung kann entsprechend ausgebildet und/oder eingerichtet sein.

Eine weitere Ausführungsform des erfindungsgemäßen Verfahrens zeichnet sich dadurch aus, dass genau ein Antwortsignal nicht verzögert wird. Werden drei oder mehr Qubits ausgelesen, gilt zweckmäßiger Weise, dass die verbleibenden Antwortsignale unterschiedlich stark verzögert werden.

Die erfindungsgemäße Auslesevorrichtung kann wiederum entsprechend ausgebildet und/oder eingerichtet sein.

Sind beispielsweise nur zwei Qubits auszulesen, kann es ausreichend sein, wenn das Antwortsignal des einen Qubits relativ zu dem Antwortsignal des anderen Qubits verzögert werden kann bzw. wird. Das Antwortsignal eines Qubits wird mit anderen Worten nicht verzögert. Vor allem für diesen Fall kann bereits eine Verzögerungseinrichtung ausreichend sein.

Bevorzugt gilt, dass mit dem erfindungsgemäßen Verfahren und/oder mittels der erfindungsgemäßen Auslesevorrichtung mehr als zwei Qubits, insbesondere mehr als drei Qubits, bevorzugt mehr als vier Qubits, besonders bevorzugt mehr als fünf Qubits ausgelesen werden bzw. ausgelesen werden können. Die Auslesevorrichtung weist entsprechend zweckmäßiger Weise mehr als zwei Qubit-Antwort-Schaltungen, insbesondere mehr als drei, bevorzugt mehr als vier, besonders bevorzugt mehr als fünf Qubit-Antwort-Schaltungen, die bevorzugt jeweils einen Antwort-Resonator umfassen, auf.

Umfassen die Antwort-Schaltungen für die Qubits jeweils einen Antwort-Resonator, gilt in bevorzugter Ausgestaltung, dass zwischen den Antwort-Resonatoren keine starke Kopplung besteht.

Sind N (N = 2, 3, 4, 5, ...) Qubits auszulesen, können N Verzögerungseinrichtungen vorgesehen sein. Es ist auch möglich, dass für den Fall von N auszulesenden Qubits N-1 Verzögerungseinrichtungen vorhanden sind (da das Antwortsignal eines Qubits nicht verzögert wird).

Sind zwei oder mehr Verzögerungseinrichtungen, mit anderen Worten mehrere Verzögerungseinrichtungen vorgesehen, kann gelten, dass verschiedene Verzögerungseinrichtungen verschieden lange Verzögerungen von Qubit-Antwortsignalen bedingen. Rein beispielhaft sei genannt, dass mehrere unterschiedlich lange Verzögerungen der Antwortsignale verschiedener Qubits mit mehreren unterschiedlich langen Leiterbahnen bzw. Leiterbahnabschnitten als Verzögerungseinrichtungen bedingt bzw. erzielt werden.

Sind zwei oder mehr Verzögerungseinrichtungen vorhanden, gilt bevorzugt, dass mit diesen bzw. über dies Lauf- bzw. Übertragungswege verschiedener Länge für die Antwortsignale verschiedener Qubits implementiert sind.

Eine weitere Ausführungsform zeichnet sich dadurch aus, dass von verschiedenen Qubits stammende Antwortsignale jeweils verschieden viele von mehreren vorhandenen Verzögerungseinrichtungen durchlaufen. Bezüglich der erfindungsgemäßen Auslesevorrichtung kann in Weiterbildung gelten, dass diese entsprechend ausgestaltet ist.

Rein beispielhaft sei genannt, dass zwei (oder drei) Qubits auszulesen sind und zwei Verzögerungseinrichtungen vorgesehen sind, die jeweils ausgebildet sind, um die gleiche zeitliche Verzögerung zu bedingen. Die Verzögerungseinrichtungen können z.B. baugleich, etwa durch Leiterbahnen bzw. Leitungen gleicher Länge gegeben sein. Dann kann vorgesehen sein, dass Antwortsignale, die von einem der zwei (oder drei) Qubits stammen, nur mittels einer Verzögerungseinrichtung verzögert werden, insbesondere nur eine Verzögerungseinrichtung durchlaufen, und Antwortsignale, die von einem anderen der zwei (oder drei) Qubits stammen, mittels beider Verzögerungseinrichtungen verzögert werden, insbesondere beide Verzögerungseinrichtungen durchlaufen. Dann erfahren diese eine im Vergleich doppelt so lange Verzögerung. Antwortsignale des etwaigen dritten Qubits können z.B. gar nicht verzögert werden. Im Ergebnis sind die Antwortsignale aller drei Qubits im Zeitraum separiert.

Die einzelnen Verzögerungseinrichtungen können dann z.B. auch jeweils die gleiche Verzögerung bedingen, da ein Unterschied durch abweichende Anzahl erhalten wird, wobei auch nicht ausgeschlossen ist, dass sie sich den voneinander unterscheiden und unterschiedliche Verzögerungen bedingen.

Auch kann vorgesehen sein, dass wenigstens eine der Verzögerungseinrichtungen verwendet wird, um die Antwortsignale von wenigsten zwei, mit anderen Worten mehreren, Qubits zu verzögern.

Die erfindungsgemäße Auslesevorrichtung kann entsprechend derart ausgebildet sein, dass wenigstens einer der Verzögerungseinrichtungen die von zwei verschiedenen Antwort-Schaltungen ausgegebenen, zu wenigstens zwei verschiedenen Qubits gehörigen Antwortsignale zugeführt werden können bzw. zugeführt werden, um diese zu verzögern.

Zweckmäßigerweise werden die Antwortsignale der mehreren Qubits, von denen eines oder mehrere einer Verzögerung unterzogen wurden, zum Erhalt eines gemeinsamen Antwortsignals zusammengeführt, insbesondere aufsummiert, bevorzugt innerhalb eines auch die Qubits umfassenden Qubitchips und/oder unter Nutzung einer passiven oder aktiven Schaltung. Mit anderen Worten wird werden mehrere Antwortsignale, von denen eines oder mehrere, ggf. auch alle verzögert wurden, zusammengeführt, insbesondere addiert. Das gemeinsame Antwortsignal wird zweckmäßiger Weise in der Zeitdomäne ausgewertet.

Das erhaltene gemeinsame Antwortsignal kann durch ein Wavelet gegeben sein bzw. wenigstens ein solches umfassen.

Für ein Zusammenführen können die mehreren Qubits bzw. diesen zugeordnete Verzögerungseinrichtungen ausgangsseitig direkt - oder auch indirekt über weitere Komponenten - mit einer gemeinsamen Übertragungs- bzw. Ausleseleitung verbunden sein. Die gemeinsame Ausleseleitung kann auch mit der Probenleitung zusammenfallen. Die Probenleitung ist insbesondere sowohl mit einer Probensignalerzeugungseinrichtung als auch einer gemeinsamen Ausleseeinrichtung verbunden, so dass sie als (gemeinsame) Proben- und als (gemeinsame) Ausleseleitung dienen kann.

Kommt eine aktive Schaltung zum Einsatz, ist diese bevorzugt als solche niedriger Leistung (englisch: low power) ausgebildet. Unter einer niedrigen Leistung ist insbesondere eine solche im Milliwattbereich zu verstehen.

Das erhaltene gemeinsame Antwortsignal kann zur weiteren Verarbeitung einer gemeinsamen Ausleseeinrichtung zugeführt werden, bevorzugt über die gemeinsame Übertragungs- bzw. Ausleseleitung, die mit der Probenleitung zusammenfallen kann. Die gemeinsame Ausleseeinrichtung kann Bestandteil einer erfindungsgemäßen Auslesevorrichtung oder dieser nachgeordnet sein.

Das gemeinsame Antwortsignal kann digitalisiert werden. Dabei können in an sich bekannter Weise Samplingwerte erfasst werden.

Das gemeinsame Antwortsignal kann insbesondere zunächst verstärkt, (optional) herunterkonvertiert, mit anderen Worten demoduliert, und dann bevorzugt mittels eines ADCs digitalisiert und anschließend weiterverarbeitet werden, was sich als besonders geeignet erwiesen hat.

In bevorzugter Ausgestaltung sind mindestens drei Qubits, bevorzugt mindestens vier Qubits, besonders bevorzugt mindestens fünf Qubits bzw. deren Antwort-Schaltungen mit einer gemeinsamen Ausleseleitung verbunden.

Das insbesondere digitalisierte gemeinsame Antwortsignal kann analysiert werden, um Informationen über die Zustände der mehreren Qubits zu erhalten bzw. zu entnehmen, insbesondere zu ermitteln, in welchem Zustand sich die Qubits jeweils befinden bzw. befunden haben. Die erfindungsgemäße Auslesevorrichtung ist in Weiterbildung entsprechend ausgebildet und/oder eingerichtet. Die erfindungsgemäße Auslesevorrichtung kann beispielsweise wenigstens eine Einrichtung bzw. wenigstens ein Modul umfassen, welche bzw. welches entsprechend ausgebildet und/oder eingerichtet ist. Ein Modul kann auch durch eine Software bzw. eine Kombination aus Hardware und Software gegeben sein.

Dabei kann in an sich bekannter Weise eine Ermittlung erfolgen, in welchem von zwei möglichen Zuständen (" 1" oder " 0") sich die Qubits jeweils befinden bzw. befunden haben. Die erfindungsgemäße Auslesevorrichtung ist in Weiterbildung entsprechend ausgebildet und/oder eingerichtet. Die erfindungsgemäße Auslesevorrichtung kann beispielsweise wenigstens eine Einrichtung bzw. wenigstens ein Modul umfassen, welche bzw. welches entsprechend ausgebildet und/oder eingerichtet ist. Ein Modul kann auch durch eine Software bzw. eine Kombination aus Hardware und Software gegeben sein.

Es ist möglich, dass nur ein Teil des gemeinsamen Antwortsignals analysiert wird, um Informationen über die Zustände der mehreren Qubits zu erhalten bzw. zu entnehmen. Rein beispielhaft sei genannt, dass hierfür nur eine (erste) steigende Flanke des gemeinsamen Antwortsignals, insbesondere dessen Front, herangezogen wird. Auch ist es möglich, den gesamten Verlauf des gemeinsamen Antwortsignals zu analysieren, um Informationen über die Zustände mehrerer Qubits zu erhalten.

Insbesondere kann vorgesehen sein, dass einer oder mehrere Samplingpunkte des gemeinsamen Antwortsignals ermittelt bzw. herangezogen werden, um Informationen über die Zustände der mehreren Qubits zu erhalten bzw. zu entnehmen.

Eine Ausführungsform zeichnet sich dadurch aus, dass eine bevorzugt digitalisierte Front des gemeinsamen Antwortsignales analysiert wird, um die Informationen über die Zustände der mehreren Qubits zu entnehmen bzw. zu erhalten. Die erfindungsgemäße Auslesevorrichtung ist in Weiterbildung entsprechend ausgebildet und/oder eingerichtet. Die erfindungsgemäße Auslesevorrichtung kann beispielsweise wenigstens eine Einrichtung bzw. wenigstens ein Modul umfassen, welche bzw. welches entsprechend ausgebildet und/oder eingerichtet ist. Ein Modul kann auch durch eine Software bzw. eine Kombination aus Hardware und Software gegeben sein.

Die Analyse der Front kann insbesondere erfolgen, um die darin enthaltenen von den verschiedenen Qubits stammenden Antwortsignale bzw. wiederum Fronten dieser separieren und die darin jeweils enthaltene Zustandsinformation entnehmen zu können.

Mit anderen Worten können in der Front des gemeinsamen Antwortsignals bzw. durch deren Analyse die Zustände der verschiedenen Qubits selektiert werden.

Dies hat sich als besonders zweckmäßig erwiesen, wenn das gemeinsame Antwortsignal zuvor demoduliert wird bzw. wurde. Es kann also vorgesehen sein, dass das gemeinsame Antwortsignal demoduliert wird bzw. wurde, um eine demoduliertes gemeinsamen Antwortsignal zu erhalten, und eine Analyse der Front des demodulierten gemeinsamen Antwortsignals erfolgt.

Es kann sein, dass das gemeinsame Antwortsignal eine stufenförmige Front mit mehreren Stufen aufweist, von denen jeweils eine zu dem Antwortsignal eines Qubits - bzw. der Front eines Antwortsignals eines Qubits - korrespondiert. Bevorzugt ist dann vorgesehen, dass die Samplingrate derart gewählt wird, dass auf jeder der Stufen zwei bis drei Samplingpunkte liegen, mit anderen Worten für das Antwortsignal jedes Qubits - bzw. eine Front dieses - zwei bis drei Samplingpunkte vorgesehen sind. Sind zum Beispiel die Zustände von zehn Qubits auszulesen, könnte die Front eines zugehörigen gemeinsamen Antwortsignales insbesondere zehn Stufen aufweisen und dann würde die Samplingrate zweckmäßiger Weise derart gewählt, dass 20 bis 30 Samplingpunkte auf der Front liegen.

Die erfindungsgemäß vorgesehene Verarbeitung in der Zeitdomäne macht es auch möglich, dass das gemeinsame Antwortsignal ohne vorherige Demodulation analysiert wird, um Informationen über die Zustände der zwei oder mehr Qubits zu erhalten.

Mit anderen Worten kann vorgesehen sein, dass ein (digitalisiertes) moduliertes gemeinsames Antwortsignal analysiert wird, um die Zustandsinformationen für die mehreren Qubits zu erhalten bzw. zu entnehmen. In diesem Fall kann das gemeinsame Antwortsignal z.B. als hochfrequentes Signal mit einer Frequenz im GHz-Bereich vorliegen. Es kann durch ein Wavelet gegeben sein oder wenigstens ein solches umfassen.

Insbesondere für den Fall, dass zuvor keine Demodulation des gemeinsamen Antwortsignals erfolgt, kann vorgesehen sein, dass die Analyse zum Erhalt bzw. zur Entnahme der Zustandsinformationen der mehreren Qubits umfasst, dass wenigstens eine Amplitude und/oder wenigstens ein Nulldurchgang des gemeinsamen Antwortsignals, insbesondere die Zeitlage wenigstens eines Nulldurchgangs, und/oder die Zeitlage wenigstens eines in dem gemeinsamen Antwortsignal enthaltene Peaks ermittelt wird. Die erfindungsgemäße Auslesevorrichtung ist in Weiterbildung entsprechend ausgebildet und/oder eingerichtet. Die erfindungsgemäße Auslesevorrichtung kann beispielsweise wenigstens eine Einrichtung bzw. wenigstens ein Modul umfassen, welche bzw. welches entsprechend ausgebildet und/oder eingerichtet ist. Ein Modul kann auch durch eine Software bzw. eine Kombination aus Hardware und Software gegeben sein.

Die wenigstens eine Amplitude kann z.B. durch die Amplitude an der höchsten (oder tiefsten) Stelle eines in dem gemeinsamen Antwortsignal enthaltenen Peaks (positiver oder negativer Auslenkung) sein. Unter einem Peak ist insbesondere ein nach oben oder unten geöffneter Wellenbauch des Signals zu verstehen.

Aus einer oder mehrerer der genannten Größen kann dann auf die Zustände der Qubits geschlossen werden. Es kann z.B. die Amplitude und/oder Zeitlage eines ersten in dem gemeinsamen Antwortsignal enthaltenen Peaks ermittelt und für die Zustandsbestimmung herangezogen werden.

Es ist auch möglich, den gesamten Verlauf des gemeinsamen Antwortsignals, etwa mehrere Samplingpunkte von dem gesamten Verkauf, heranzuziehen, um die Informationen über die Zustände der mehreren Qubits zu erhalten, z.B. die Form des gesamten Wavelets. Die erfindungsgemäße Auslesevorrichtung ist in Weiterbildung entsprechend ausgebildet und/oder eingerichtet, kann beispielsweise wenigstens eine entsprechende Einrichtung bzw. ein entsprechendes Modul umfassen, welches auch durch eine Software bzw. eine Kombination aus Hardware und Software gegeben sein kann.

Hierdurch kann eine besonders hohe Genauigkeit gewährleistet werden. Im Rahmen der Digitalisierung werden dann bevorzugt auch Samplingpunkte über den gesamten Verlauf des gemeinsamen Antwortsignals, etwa Wavelets, erhalten.

Eine weitere besonders zweckmäßige Ausführungsform zeichnet sich dadurch aus, dass einer oder mehrere Samplingpunkte bzw. Samplingwerte des gemeinsamen Antwortsignals gespeichert werden. Die erfindungsgemäße Auslesevorrichtung kann entsprechend ausgebildet sein, insbesondere wenigstens eine Pipeline bzw. wenigstens einen Speicher zur (Zwischen-)Speicherung von Samplingpunkten bzw. Samplingwerten umfassen. Der oder die (zwischen-)gespeicherten Samplingpunkte bzw. Samplingwerte können dann berücksichtigt werden, um die Informationen über die Zustände der mehreren Qubits zu erhalten.

Eine Analyse ohne vorherige Demodulation kann die Messzeit reduzieren, da auf hochfrequenten, insbesondere GHz-Antwortsignalen mehrere Samplingpunkte in kurzer Zeit von z.B. wenigen Nanosekunden liegen können, was ausreichend für die Auswertung/Ermittlung der Zustände aller Qubits sein kann. Die Verarbeitung, insbesondere Analyse kann schon nach einigen Nanosekunden beginnen. Das Signalauslesen, insbesondere Sampling, und die Verarbeitung können in der Pipeline erfolgen.

Eine weitere bevorzugte Ausführungsform zeichnet sich dadurch aus, dass unter Nutzung eines analogen oder digitalen Verstärkers und/oder Filters eine DC-Signalamplitude des gemeinsamen Antwortsignals ermittelt wird, die für eine Analog-Digital-Konversion (ADC) geeignet ist. Dies insbesondere für den Fall, dass keine Demodulation erfolgt. Anschließend kann eine Digitalisierung unter Nutzung wenigstens eines Analog-Digital-Wandlers erfolgen und sich insbesondere dann die vorgenannte Analyse anschließen.

Der analoge bzw. digitale Verstärker und/oder Filter kann Bestandteil der Ausleseeinrichtung sein. Gleiches gilt für den wenigstens einen Analog-Digital-Wandler.

Eine weitere vorteilhafte Ausführungsform zeichnet sich dadurch aus, dass eine künstliche Intelligenz, beispielsweise wenigstens ein neuronales Netz, für die bzw. im Rahmen der Analyse des gemeinsamen Antwortsignales zum Erhalt der Informationen über die Zustände der mehreren Qubits genutzt wird.

Die Verzögerungen können sich zum Beispiel im Bereich von 0,5 bis 10 Nanosekunden bewegen. Um das gemeinsame Antwortsignal, insbesondere eine durch Aufsummierung der einzelnen Antwortsignale erhaltene Front dieses auf besonders geeignete Weise messen zu können, wird bevorzugt ein Analog-Digital-Wandler mit einer Frequenz von bis zu 10 GHz genutzt oder mehrere Analog-Digital-Wandler mit einer geringeren Samplingrate.

Es ist möglich, dass die zeitliche Verzögerung des Antwortsignals insbesondere jedes Qubits kleiner ist als die Dauer des insbesondere pulsförmigen Antwortsignals. Rein beispielhaft sei genannt, dass das Probensignal und/oder die Antwortsignale der Qubits jeweils eine Pulsdauer von 100 Nanosekunden aufweisen und 16 Qubits auszulesen sind, wobei das Antwortsignal eines Qubits nicht verzögert wird, das eines weiteren Qubits um eine Nanosekunde, das eines dritten Qubits um zwei Nanosekunden, das eines vierten Qubits um drei Nanosekunden, ..., und das des sechszehnten Qubits um 15 Nanosekunden. Es ist auch möglich, dass die Verzögerung des Antwortsignals insbesondere jedes Qubits größer ist als die Probensignal(puls)dauer und/oder die Antwortsignal(puls)dauer.

Die erfindungsgemäße Auslesevorrichtung kann in sich in Weiterbildung dadurch auszeichnen, dass die zeitliche Verzögerung des Antwortsignals jedes Qubits durch die wenigstens eine Verzögerungseinrichtung kleiner oder größer ist als die Dauer des Antwortsignals.

Eine weitere besonders vorteilhafte Ausführungsform des erfindungsgemäßen Verfahrens zeichnet sich dadurch aus, dass das Probensignal für die Triggerung der gemeinsamen Ausleseeinrichtung, insbesondere eines Analog-Digital-Wandlers dieser oder mehrerer Analog-Digital-Wandler dieser verwendet wird. Die erfindungsgemäße Auslesevorrichtung ist in Weiterbildung entsprechend ausgebildet und/oder eingerichtet. Beispielsweise kann eine Probensignalerzeugungseinrichtung, die Bestandteil einer erfindungsgemäßen Auslesevorrichtung oder einer solche zugeordnet sein kann, mit einer gemeinsamen Ausleseeinrichtung, insbesondere wenigstens einem ADC einer solchen, derart verbunden sein, dass von der Probensignalerzeugungseinrichtung ein Triggersignal an die gemeinsame Ausleseeinrichtung, insbesondere den wenigstens einen ADC, gesendet werden kann. Dies beispielswiese zeitgleich mit dem Senden eines Probensignals an die Qubits oder auch (jeweils) mit einem vorgegebenen zeitlichen Abstand zum Senden eines Probensignals. Es ist auch möglich, dass das Probensignal als Triggersignal an eine Ausleseeinrichtung gesendet wird.

Es kann mit anderen Worten das Szenario genutzt werden, gemäß dem eine erfindungsgemäße Auslesevorrichtung das (jeweilige) Probensignal sendet und auch selber die Antwortsignale bzw. das gemeinsame Antwortsignal ausliest. Die Verzögerung zwischen diesen beiden Ereignissen ist in der Regel fest. Jeder Messzyklus ist üblicher Weise von einem " Leerlauf" (englisch: idle) gefolgt, der für die Bit-Manipulation erforderlich ist. Das bedeutet, dass eine Ausleseeinrichtung bzw. wenigstens ein Analog-Digital-Wandler (ADC), der Teil dieser ist bzw. die Ausleseeinrichtung bildet, mittels des bzw. in Abhängigkeit des Probensignals getriggert werden kann.

Eine weitere vorteilhafte Ausführungsform zeichnet sich dadurch aus, dass die gleiche Clockquelle, mit anderen Worten der gleiche Clock-Generator, sowohl für die Erzeugung des Probensignals als auch für die Ausleseeinrichtung, insbesondere für einen Analog-Digital-Wandler (ADC) dieser, genutzt wird. Es sei angemerkt, dass die Frequenz der Clock für das Probensignal und die Frequenz der Clock für die Ausleseeinrichtung, insbesondere für einen Analog-Digital-Wandler (ADC) dieser, nicht übereinstimmen muss, die Clocks mit anderen Worten verschiedene Frequenzen aufweisen können. Diese sind jedoch bevorzugt phasenstarr.

Besonders bevorzug gilt, dass ein im Rahmen der Probensignalerzeugung genutzter Digital-Analog-Wandler (DAC) und ein für das Auslesen des gemeinsamen Antwortsignals genutzter Analog-Digital-Wandler (ADC) von demselben Clock-Generator getaktet werden. Es kann vorgesehen sein, dass für einen im Rahmen der Probensignalerzeugung genutzten Digital-Analog-Wandler (DAC) und für einen für das Auslesen des gemeinsamen Antwortsignals genutzten Analog-Digital-Wandler (ADC) phasenstarre, insbesondere von der gleichen Clockquelle erzeugte Clocks genutzt werden. Die erfindungsgemäße Auslesevorrichtung bzw. ein Quantencomputer mit einer solchen kann entsprechend ausgebildet und/oder eingerichtet sein. Insbesondere kann eine Clockquelle vorhanden sein, welche sowohl mit einem zur Probensignalerzeugung genutzten Digital-Analog-Wandler (DAC) als auch einem für das Auslesen des gemeinsamen Antwortsignals genutzten Analog-Digital-Wandler (ADC) verbunden ist.

Es ist auch möglich, ein Zeitstreckverfahren (englisch: time stretching method) zu nutzen, um die Samplingkapazitäten zu reduzieren. Beispielsweise können mehrere Analog-Digital-Wandler mit geringerer Samplingrate und Phasen-verschobene Clocks genutzt werden.

Auch kann vorgesehen sein, dass eine insbesondere gemeinsame Ausleseeinrichtung, die im Rahmen des erfindungsgemäßen Verfahrens verwendet werden bzw. die Bestandteil einer erfindungsgemäßen Auslesevorrichtung sein kann, wenigstens einen Domino-Sampling-Chip (DSC) bzw. wenigstens einen Domino-Sampling-Chip (DSC) Ring umfasst oder durch einen solchen gegeben ist. Mit anderen Worten ist es auch möglich, einen Domino-Sampling-Chip (DSC) bzw. DSC Ring zu verwenden. Aufbau und Funktionsweis eines Domino-Sampling-Chips bzw. - Ringes, wie er im Rahmen der vorliegenden Erfindung zum Einsatz kommen kann, ist zum Beispiel in dem Artikel " Domino Ring Sampler (DRS) Performances in Dual-Readout Calorimetry" von Fabrizio Scuri, IEEE Nuclear Science Symposuim & Medical Imaging Conference, Knoxville, TN, USA, 2010, pp. 1711-1717, doi: 10.1109/NSSMIC.2010.5874067, beschrieben.

Bevorzugt gilt, dass die zu verschiedenen Qubits gehörigen Antwortsignale für gleiche Qubit-Zustände die gleichen Frequenzkomponenten aufweisen.

Die Antwort-Schaltungen der Qubits können ferner, wie angemerkt, jeweils einen eigenen Antwort-Resonator umfassen und die Antwort-Resonatoren der verschiedener Qubits stimmen zweckmäßiger Weise hinsichtlich ihrer Resonanzfrequenz überein. Die Resonanzfrequenz der Antwort-Resonatoren liegt bevorzugt im Bereich von 5 bis 10 GHz. Die Antwort-Resonatoren sind dann entsprechend ausgebildet und/oder eingerichtet. Es ist möglich, dass die Antwort-Resonatoren verschiedener, insbesondere aller Qubits baugleich ausgebildet sind.

Die Antwort-Schaltungen der Qubits können neben einem Antwort-Resonator noch weitere Elemente bzw. Komponenten umfassen oder auch jeweils durch einen Antwort-Resonator gegeben sein.

Gegenstand der Erfindung ist auch ein Quantencomputer umfassend wenigstens eine erfindungsgemäße Auslesevorrichtung und mehrere Qubits. Zweckmäßiger Weise gilt, dass jeweils eine Antwort-Schaltung der Auslesevorrichtung mit jeweils einem Qubit verbunden ist. Bevorzugt gilt ferner, dass der Quantencomputer N (N = 2, 3, 4, 5, 6, ...) Qubits umfasst und die Auslesevorrichtung N Verzögerungseinrichtungen oder N -1 Verzögerungseinrichtungen aufweist. Die Qubits sind üblicher Weise auf einem Qubitchip angeordnet. Dann gilt weiter bevorzugt, dass sich die Antwort-Schaltungen und die Verzögerungseinrichtung(en) ebenfalls auf dem Qubitchip befinden. Hinsichtlich der Ausgestaltungen der Erfindung wird auch auf die Unteransprüche sowie auf die nachfolgende Beschreibung mehrerer Ausführungsbeispiele unter Bezugnahme auf die beiliegende Zeichnung verwiesen.

Darin zeigt:
- Figur 1: in rein schematischer Darstellung ein erstes Ausführungsbeispiel eines erfindungsgemäßen Quantencomputers umfassend mehrere Qubits und ein erstes Ausführungsbeispiel einer erfindungsgemäßen Auslesevorrichtung in rein schematischer Darstellung;
- Figur 2: ein zweites Ausführungsbeispiel eines erfindungsgemäßen Quantencomputers umfassend mehrere Qubits und ein zweites Ausführungsbeispiel einer erfindungsgemäßen Auslesevorrichtung in rein schematischer Darstellung;
- Figur 3: eine rein schematische Darstellung zur zeitlichen Verzögerung der Antwortsignale mehrerer Qubits und der Analyse der Front eines zugehörigen gemeinsamen Antwortsignals;
- Figur 4: die Antwortsignale von drei verschiedene Qubits sowie zwei zugehörige gemeinsame Antwortsignale für verschiedene Zustandsszenarien;
- Figur 5: eine rein schematische Darstellung eines Antwortsignals eines Qubits in Form eines Wavelets;
- Figur 6: in vergrößerte Darstellung ein gemeinsames Antwortsignal für den Fall, dass die Dauer des Probenpulses die Dauer der Verzögerungen der Antwortsignale unterschreitet (oben) und für den Fall, dass die Dauer des Probenpulses die Dauer der Verzögerungen der Antwortsignale überschreitet (oben); und
- Figur 7: eine rein schematische Darstellung einer Variante, bei der ein DSC Ring zum Einsatz kommt, für dessen Triggerung das Probensignal verwendet wird,

Gleiche bzw. gleichartige Komponenten sind in den Figuren mit gleichen Bezugszeichen versehen.

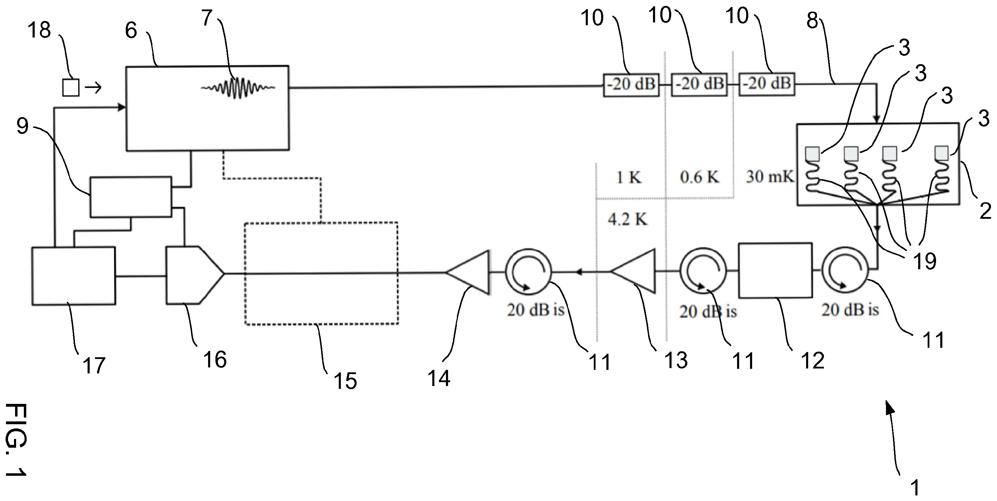

Die Figur 1 zeigt in rein schematischer Darstellung Bestandteile eines ersten Ausführungsbeispiels eines erfindungsgemäßen Quantencomputers 1 mit einem Qubitchip 2 mit mehreren Qubitanordnungen 3. Jede Qubitanordnung 3 umfasst ein Qubit Q1-Q4, der Quantencomputer 1 also mehrere Qubits Q1-Q4. Bei dem Quantencomputer 1 handelt es sich um einen supraleitenden Quantencomputer 1 und die Qubits Q1-Q4 sind als Flux-Qubits ausgebildet, was beispielhaft zu verstehen ist. Wie man erkennt, umfasst der Qubitchip 2 hier vier Qubitanordnungen 3 mit je einem Qubit Q1-Q4. Diese Anzahl ist rein beispielhaft zu verstehen und es könnten beispielsweise auch nur zwei oder drei oder auch mehr als vier Qubitanordnungen 3 mit je einem Qubit Q1-Q4 vorhanden sein.

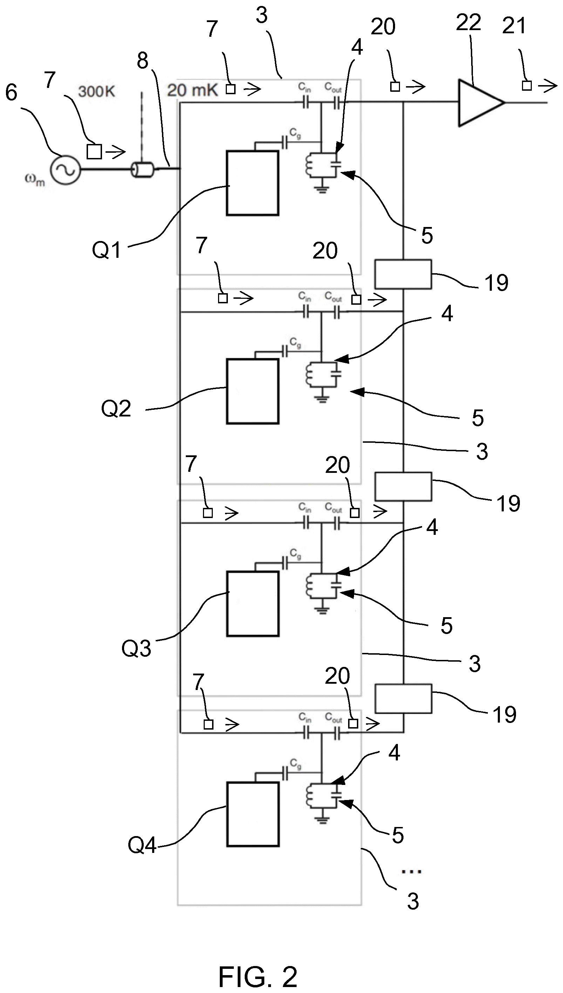

Jedem Qubit Q1-Q4 ist eine eigene, einen Antwort-Resonator 4 aufweisende bzw. durch den Antwort-Resonator 4 gegebene Antwortschaltung 5 zugeordnet, die Bestandteil der jeweiligen Qubitanordnung 3 ist. Die einzelnen Qubits Q1-Q4 und zugehörigen Antwort-Schaltungen 5 mit den Antwort-Resonatoren 4 sind in der schematischen Figur 1 nicht erkennbar, können jedoch der Figur 2 entnommen werden. Diese zeigt Bestandteile eines zweiten Ausführungsbeispiels eines erfindungsgemäßen Quantencomputers 1 und darin sind die Qubitanordnungen 3 vergrößert mit ihren Bestandteilen erkennbar. Wie man in Figur 2 sieht, weist der Antwort-Resonator 4 jeder Qubitanordnung 3 eine Spule und einen Kondensator auf. Die Antwort-Resonatoren 4 aller Qubitanordnungen 3 zeichnen sich durch die gleiche Resonanzfrequenz aus. Die Antwort-Resonatoren 4 sind jeweils über eine Kapazität c_{g} mit demjenigen Qubit Q1-Q4 verbunden, dem sie zugeordnet sind. Die Antwort-Resonatoren 4 sind nicht stark gekoppelt.

Weiterhin in der Figur 1 zu erkennen sind eine Mikrowellenquelle 6 zur Erzeugung eines Probensignals 7, mit anderen Worten eine Probensignalerzeugungseinrichtung. Ein neben dem Probensignal 7 dargestellter Pfeil veranschaulicht, dass das Probensignal 7 in Richtung des Qubitchips 2 übertragen wird. Das Probensignal 7, welches bei dem dargestellten Ausführungsbeispiel durch ein Wavelet gegeben ist, wird den Qubits Q1-Q4 über eine gemeinsame Probenleitung 8 zugeführt. Diese kann in mehrere, sich jeweils bis zu einer Qubitanordnung 3 bzw. einem Qubit Q1-Q4 erstreckende Abzweigungsleitungen münden, über welche dann jeder Qubitanordnung 3 bzw. jedem Qubit Q1-Q4 das Probensignal 7 zugeführt werden kann (vgl. Figur 2). Der Weg, den das Probensignal 7 von der Mikrowellenquelle 6 zu den Qubits Q1-Q4 bzw. zu den Antwort-Resonatoren 4 dieser zurücklegen muss, ist dabei für alle Qubits Q1 bis Q4 gleich lang, so dass ein von der Mikrowellenquelle 6 ausgesendetes Probensignal 7 gleichzeitig bei allen Qubits Q1 bis Q, insbesondere deren Antwort-Resonatoren 4, ankommt. Hier sind die zu den einzelnen Qubits Q1 bis Q4 führenden Abzweigungsleitungen (in Figur 1 nicht eingezeichnet), die alle an der gleichen Stelle von der gemeinsamen Probenleitung 8 abzweigen, gleich lang, um dies zu gewährleisten. Auch die Leitungen, die jeweils ein Qubit Q1 bis Q4 mit seinem zugehörigen Antwort-Resonator 4 verbinden sind für alle Qubits Q1 bis Q4 gleich lang.

Es ist natürlich auch möglich, dass Abzweigungsleitungen von verschiedenen Positionen von der gemeinsamen Probenleitung 8 abgehen und verschiedene Längen aufweisen, wobei insgesamt betrachtet wieder gilt, dass der Übertragungsweg für das Probensignal 7 von der Quelle 6 zu den Qubits Q1 bis Q4 bzw. Antwort-Resonatoren 4 gleich lang ist.

Es ist ferner ein Clock-Generator insbesondere in Form eines Clock-Trees 9 dargestellt, von dem die Mikrowellenquelle 6 geclocked, mit anderen Worten getaktet wird und hierfür über eine Leitung mit dem Clock-Tree 9 verbunden ist.

Weiterhin dargestellt sind Abschwächungselemente 10, die jeweils eine Abschwächung des Signals um -20 dB bewirken können. Dies, bevor das Probensignal 7den Qubitchip 2 erreicht. Dem Qubitchip 2 nachgeschaltet sind kryogenische Zirkulierer 11, die jeweils eine Isolation von 20 dB bedingen (in Figur 1 abgekürzt mit 20 dB is), ein Bandpassfilter 12, z.B. mit einer Bandbreite von etwa 10 MHZ, und Verstärkerstufen 13, 14.

Ein Modul für das Heruntermischen bzw. Demodulieren, das auch einen Tiefpassfilter aufweist, ist mit dem Bezugszeichen 15 versehen. Dieses ist mit gestrichelter Linie dargestellt, worauf weiter unten noch näher eingegangen wird. Dem Modul 15 folgen ein ADC 16 und ein Steuer- und digitales Signalverarbeitungsmodul 17, die beide ebenfalls mit dem Clock-Tree 9 verbunden sind. Der ADC 16 kann beispielsweise eine Samplingrate im Bereich von 1 bis 4 GSPS (Giga Samples pro Sekunde) aufweisen.

Das Modul 17 kann Trigger 18 ausgeben, um die Probensignalerzeugung durch die Mikrowellenquelle 6 zu starten. Das Steuermodul 17 kann ferner die digitale Signalverarbeitung, insbesondere mit dem ADC 16, starten.

In der Figur 1 ebenfalls eingezeichnet sind jeweils vorherrschende Temperaturen in Kelvin. Wie man erkennt, wird der Qubitchip 2 bei einer Temperatur von 30 Millikelvin betrieben. Erzeugung von Probensignal 7 mit der Quelle 6 und die digitale Signalverarbeitung mit den Komponenten 15, 16, 17, 9 finden bei 300 K statt.

Der Quantencomputer 1 bzw. dessen Qubitchip 2 umfasst ferner - im Gegensatz zu konventionellen Quantencomputern - mehrere Verzögerungseirichtungen 19, hier für jedes Qubit Q1-Q4 eine, also insgesamt vier (N=4) Verzögerungseinrichtungen 19. Dabei ist jeweils eine Verzögerungseinrichtung 19 einem Qubit Q1-Q4 bzw. dessen Antwort-Schaltung 5 zugeordnet und nachgeschaltet. Dies ist erneut nur in Figur 2 erkennbar.

Jede der vier Verzögerungseinrichtungen 19 ist bei dem dargestellten Ausführungsbeispiel durch eine Leiterbahn 19 gegeben, wobei sich die Längen der vier Leiterbahnen 19 voneinander unterscheiden. Es weisen keine zwei der vier Leiterbahnen 19 die gleiche Länge auf.

Mit dem Quantencomputer 1 aus Figur 1 kann ein Ausführungsbeispiel des erfindungsgemäßen Verfahrens zum parallelen Auslesen der Zustände mehrerer Qubits Q1-Q4 durchgeführt werden.

Dabei erfolgt ein dispersives Auslesen der Flux-Qubits Q1-Q4.

Erfindungsgemäß erfolgt dabei ein Zeitmultiplexing unter Verwendung der zu diesem Zweck vorgesehenen Verzögerungseinrichtungen 19.

Konkret wird den Qubits Q1-Q4 zum Auslesen deren Zustände das gleiche Probensignal 7 über die gemeinsame Probenleitung 8 und insbesondere Abzweigungsleitungen zu den einzelnen Qubits Q1-Q4 zugeführt.

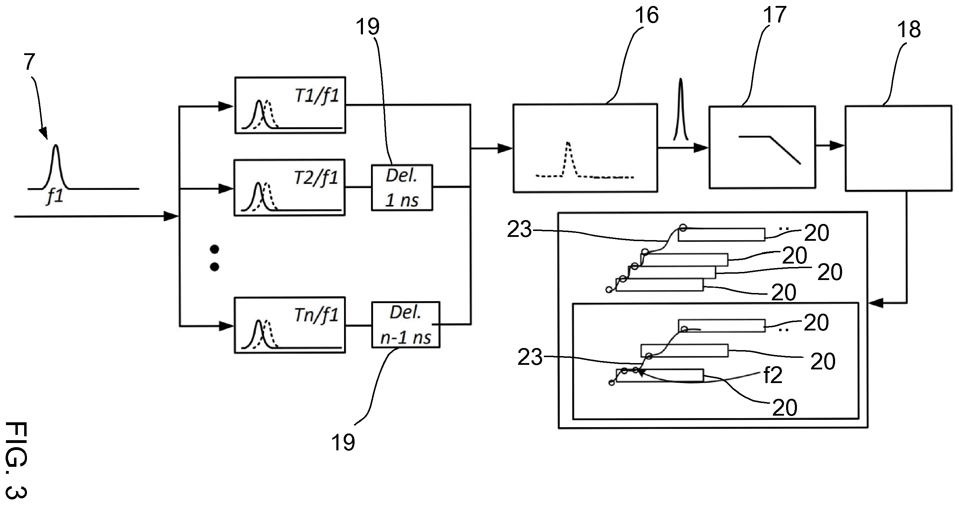

Das Probensignal 7 ist ein mittels der Mikrowellenquelle 6 erzeugtes Mikrowellensignal vergleichsweise geringer Bandbreite. Es zeichnet sich bevorzugt durch eine Bandbreite von nur einigen MHz, beispielswiese 5 bis 10 MHz aus (entspricht Pulsdauern von 200 bis 100 ns). Im Gegensatz zu einem Probensignal, wie es bei dem weiter oben beschriebenen, aus dem Stand der Technik vorbekannten Frequenzmultiplexing-Ansatz (FDM) für die Zustandsauslesung verwendet wird, weist das Probensignal 7 nur einen Mikrowellen-Ton f1 für alle Qubits Q1-Q4 auf und nicht für jedes der Qubits Q1-Q4 einen anderen Mikrowellen-Ton (vgl. auch Figur 3, auf die weiter unten noch näher eingegangen wird). In weiterem Gegensatz zu dem FDM-Ansatz zeichnen sich die Antwort-Resonatoren 4 aller vier Qubits Q1-Q4, wie oben angemerkt, durch die gleiche Resonanzfrequenz aus. Sie können baugleich sein.

In Reaktion auf das dem jeweiligen Qubit Q1-Q4 zugeführte und gleichzeitig bei den Qubits Q1 bis Q4 ankommende Probensignal 7 wird über die Antwort-Schaltung 5 des jeweiligen Qubits Q1-Q4 ein Antwortsignal 20 mit einer Information über den Zustand des jeweiligen Qubits Q1-Q4 ausgegeben (vgl. Figur 2). Die Antwortsignale 20 der Qubits weisen einen zeitlich veränderlichen Verlauf auf. Man kann auch sagen, sie sind zeitvariabel.

Die zu den verschiedenen Qubits Q1-Q4 gehörigen Antwortsignale 20 weisen dabei für gleiche Qubit-Zustände die gleichen Frequenzkomponenten auf. Dies wiederum im Gegensatz zu dem FDM-Ansatz.

Die erhaltenen Antwortsignale 20 durchlaufen erfindungsgemäß jeweils die den Qubitanordnungen 3 nachgeschalteten Verzögerungseinrichtungen 19. Da die Verzögerungseinrichtungen 19 durch Leiterbahnen unterschiedlicher Länge gegeben sind, haben die Antwortsignale 20 verschieden lange Lauf- bzw. Übertragungswege und werden verschieden stark verzögert. Es werden alle Antwortsignale 20 unterschiedlich stark verzögert. Die Längen der Leiterbahnen 19 können beispielswiese so gewählt sein, dass das von dem Qubit Q1 stammende Antwortsignal 20 um eine Nanosekunde verzögert wird, das von dem Qubit Q2 stammende Antwortsignal 20 um zwei Nanosekunden, das von dem Qubit Q3 stammende Antwortsignal 20 um drei Nanosekunden und das von dem Qubit Q4 stammende Antwortsignal 20 um vier Nanosekunden, verglichen mit einem Szenario ohne die Verzögerungseinrichtungen 19.

Durch Nutzung der Leiterbahnen verschiedener Länge als Verzögerungseinrichtungen 19 können die Antwortsignale unter Aufrechterhaltung ihres zeitlichen Verlaufes verzögert werden. Nach dem Durchlaufen der als Verzögerungseinrichtungen 19 dienenden Leiterbahnen liegen weiterhin zeitvariable Antwortsignale 20 vor, die lediglich unterschiedlich stark verzögert wurden.

Die unterschiedlich stark verzögerten Antwortsignale 20 werden anschließend zum Erhalt eines gemeinsamen Antwortsignals 21 zusammengeführt, insbesondere aufsummiert, hier innerhalb des auch die Qubits Q1-Q4 umfassenden Qubitchips 2 und unter Nutzung einer passiven Schaltung 22 oder einer aktiven Schaltung niedriger Leistung 22 (nur in Figur 2 erkennbar).

Das gemeinsame Antwortsignal 21 durchläuft bei dem in Figur 1 dargestellten Beispiel ie dem Qubitchip 2 nachgeschalteten Elemente 11, 12, 13 und 14, mit anderen Worten mehrere kryogenische Zirkulatoren 11, einen Bandpassfilter 12 und zwei Verstärkungsstufen 13, 14.

Mit dem Modul 15 erfolgt eine Demodulation des gemeinsamen Antwortsignal 21 und mit dem ADC 16 wird es digitalisiert.

Es sei angemerkt, dass bei dem hier gezeigten Ausführungsbeispiel ein stark, man kann auch sagen " hart", synchronisiertes System gegeben ist. Die Probensignalerzeugungseinrichtung 6, der ADC 16 und das Modul 17 für die Steuerung und digitale Signalverarbeitung werden erkennbar alle von dem Clock-Tree 9 geclocked, also getaktet. Das Delay zwischen dem Start der Probenpulserzeugung und dem Auslesen der Antwort ist fest.

Es wird die gleiche Clockquelle, mit anderen Worten der gleiche Clock-Generator 9, sowohl für die Erzeugung des Probensignals 7 als auch für die Ausleseeinrichtung, insbesondere für den Analog-Digital-Wandler 16 dieser, genutzt. Es sei angemerkt, dass die Frequenz der Clock für das Probensignal 7 und die Frequenz der Clock für die Ausleseeinrichtung, insbesondere für einen Analog-Digital-Wandler 16 dieser, nicht übereinstimmen muss, die Clocks mit anderen Worten verschiedene Frequenzen aufweisen können. Diese sind jedoch phasenstarr.

Das (digitalisierte) gemeinsame Antwortsignal 21 kann analysiert werden, um die Zustandsinformationen zu den mehreren Qubits G1-G4 zu erhalten. Es ist sowohl möglich, dass nur ein Teil des gemeinsamen Antwortsignals 21 analysiert bzw. herangezogen wird, um Informationen über die Zustände der mehreren Qubits Q1-Q4 zu erhalten bzw. zu entnehmen. Rein beispielhaft sei genannt, dass hierfür nur eine (erste) steigende Flanke des gemeinsamen Antwortsignals 21, insbesondere dessen Front, herangezogen wird. Auch ist es möglich, den gesamten Verlauf des gemeinsamen Antwortsignals 21 zu analysieren, um Informationen über die Zustände mehrerer Qubits zu erhalten.

Die Front des durch Digitalisierung mittels des ADCs 16 erhaltenen digitalen Signals kann z.B. analysiert werden, um die Zustandsinformationen der einzelnen Qubits Q1-Q4 zu separieren und die Zustände " 1" oder " 0" für jedes Qubit Q1-Q4 zu erkennen bzw. zu ermitteln.

Dies ist - rein schematisch - in Figur 3 veranschaulicht. In dieser Figur ganz links ist das Probensignal 7 mit dem einen Mikrowellen-Ton f1 für alle Qubits Q1-Q4 zu erkennen. Dieses wird den mehreren Qubits Q1-Q4 (in der Figur nicht erneut dargestellt) zugeführt und die Antwortsignale 20 durchlaufen die Verzögerungseinrichtungen 19, die in Figur 3 zu erkennen sind. In Figur 3 ist ein Szenario für n (n = 2, 3, 4, ...) Qubits gezeigt. Es sei angemerkt, dass gemäß Figur 3 - in Abweichung zu Figur 1 - für das erste Qubit kein Verzögerungselement 19 vorgesehen ist. Gleiches gilt für das Qubit Q1 aus Figur 2. Nach Durchlaufen des schmalbandigen Verstärkers oder Lock-ins 16, Tiefpassfilters 17 und ADCs 18 kann die Analyse der Front erfolgen, was im Kasten unten rechts in Figur 3 schematisch angedeutet ist.

Hier zu erkennen ist die Front bzw. steigende Flanke 23 des gemeinsamen Antwortsignals 21 für einen ersten, im Kasten oben dargestellten und einen zweiten, im Kasten unten dargestellten Fall. Ebenfalls darstellt durch kleine auf der Front 23 liegende Kreise sind durch die Digitalisierung erhaltenen Samplingwerte, die beispielhaft zu verstehen sind. Jeweils unter der Front 23 des gemeinsamen Antwortsignals 21 schematisch als zueinander versetzte Balken dargestellt sind die einzelnen, verzögerten Antwortsignale 20 der Qubits Q1-Qn für den Fall eines bestimmten der beiden möglichen Zustände, insbesondere " 1". Für den Fall, dass sich das entsprechende Qubit Q1-Qn in dem anderen Zustand, insbesondere " 0", befand, ist kein Balken eingezeichnet. Wie man erkennt, hat die Front 23 einen stufenförmigen Verlauf, wobei für den Fall, dass sich ein Qubit Q1-Qn im Zustand " 0" befand, die Front 23 an entsprechender Stelle verschoben ist (Frequenzverschiebung zu f2 aufgrund des Zustands " 0"). Aus dem Verlauf der Front 23 - mit anderen Worten aus der Form der Front 23 - können somit die Zustände der einzelnen Qubits Q1-Qn entnommen werden.

Die Verarbeitung in der Zeitdomäne macht es prinzipiell auch möglich, dass das gemeinsame Antwortsignal 21 ohne vorherige Demodulation analysiert wird, um Informationen über die Zustände der zwei oder mehr Qubits Q1-Qn zu erhalten. In diesem Falle würde das Modul 15 aus Figur 1 für die Demodulation nicht genutzt, weshalb dieses dort mit gestrichelter Linie dargestellt ist.

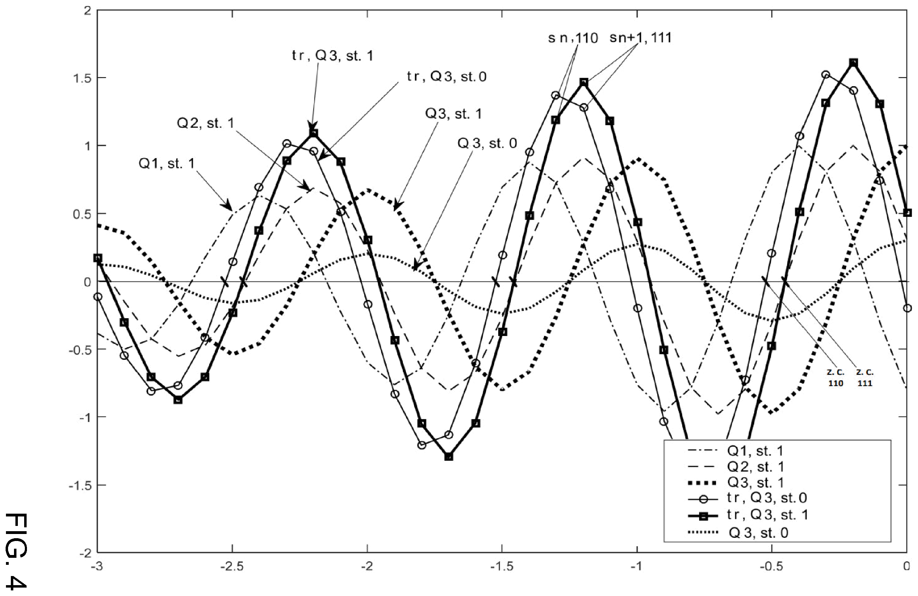

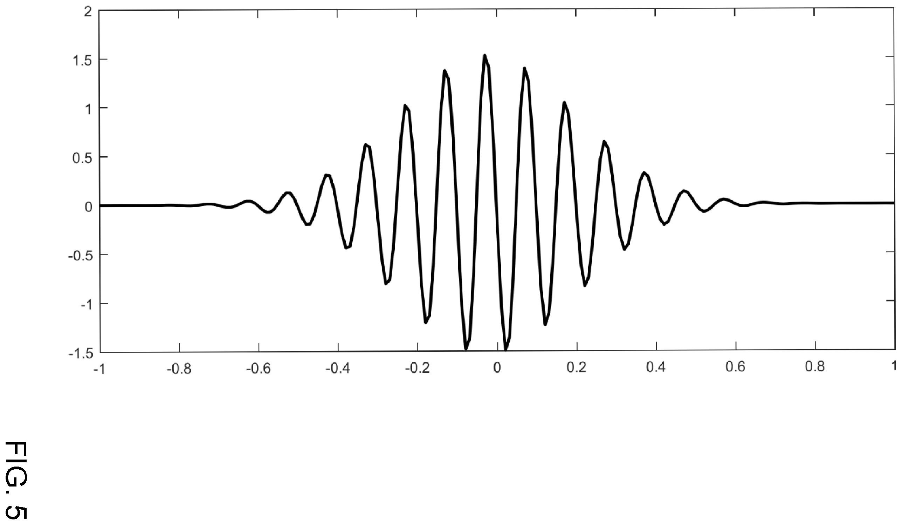

Die Analyse ohne vorherige Demodulation ist rein schematisch und beispielhaft in der Figur 4 dargestellt. Die Antwortsignale 20 sind bei dem hier gezeigten Ausführungsbeispiel durch Wavelets gegeben. Ein solches Wavelet ist in Figur 5 nochmals vergrößert dargestellt.

In der Figur 4 abschnittsweise dargestellt sind einzelne Antwortsignale - hier beispielhaft für drei Qubits Q1 bis Q3. Dabei ist für alle drei Qubits Q1-Q3 das Antwortsignal für den Fall des Zustandes "1" dargestellt und für das Qubit Q3 zusätzlich auch dessen Antwortsignal für den Fall des Zustandes " 0". Das Antwortsignal von Qubit Q3 für den Fall des Zustandes " 1" ist in Figur 4 mit Q3, st. 1 und für den Fall des Zustandes " 0" mit Q3, st. 0 bezeichnet. Für die Qubits Q1 und Q2 ist die Bezeichnung für den Zustand " 1" analog, lautet also Q1, st. 1 bzw. Q2, st. 1.

Es gilt wieder, dass die Antwortsignale der drei Qubits Q1 bis Q3 unterschiedlich stark zeitlich verzögert sind. Dies erkennt man daran, dass sie in Richtung der die Zeit (einheitenlos) repräsentierenden X-Achse zueinander versetzt sind. Die Verzögerung kann mittels der in den Figuren 1 bzw. 2 dargestellten Verzögerungseinrichtungen 19 bewirkt worden sein. Zwischen jeweils zwei aufeinanderfolgenden Antwortsignalen liegen 0,2 T, wobei T die Zentralfrequenz des Spektrums der Antwortsignale ist. Diese Verzögerung ist rein beispielhaft zu verstehen und andere Werte sind möglich.

Es sei angemerkt, dass die Figur 4 nur Ausschnitte der Antwortsignale vergrößert darstellt, man also von der Gesamtanzahl der Wellenbäuche des jeweiligen Waveletes (vgl. Figur 5) nur einige erkennt.

In der Figur 4 zusätzlich abschnittsweise dargestellt ist das durch Aufsummieren der Antwortsignale aller drei Qubits Q1 bis Q3 erhaltene gemeinsame Antwortsignal und zwar einmal für den Fall, dass sich alle drei Qubits Q1-Q3 im Zustand " 1" befinden bzw. befanden und einmal für den Fall, dass sich die Qubits Q1 und Q2 im Zustand " 1" befinden bzw. befanden, das Qubit Q3 hingegen im Zustand " 0". Das gemeinsame Antwortsignal ist für den Fall der Zustandskombination 111 (Q1, Q2, Q3) mit tr, Q3, st. 1 bezeichnet und für den Fall der Zustandskombination 110 (Q1, Q2, Q3) mit tr, Q3, st. 0 (Abkürzung " tr" steht für " total response"). Die gemeinsamen Antwortsignale sind durch Samplingpunkte dargestellt, welch im Falle von tr, Q3, st. 0 als Kreise und im Falle von tr, Q3, st. 1 als Vierecke eingezeichnet sind. Die Samplingpunkte sind durch gerade Linien miteinander verbunden.

Wie man erkennt, weichen die beiden gemeinsamen Antwortsignale tr, Q3, st. 1 und tr, Q3, st. 0 für die beiden verschiedenen Zustandskombinationen 111 und 110 voneinander ab. Dies insbesondere, was den Verlauf und die Zeitlage angeht. Zum Beispiel gilt, dass das gemeinsame Antwortsignal tr, Q3, st. 0 zeitlich vor dem gemeinsamen Antwortsignal tr, Q3, st. 1 liegt. Dies, weil die geringere Amplitude des Antwortsignals von Qubit Q3 im Falle des Zustandes " 0", also von Q3, st. 0, zu einer Verschiebung des gemeinsamen Abtwortsignals in Figur 4 nach links führt. Für den Fall, dass z.B. das Qubit Q1 im Zustand " 0" wäre, wäre es - verglichen mit tr, Q3, st. 1 - nach rechts verschoben, für den Fall, dass Q2 den Zustand " 0" hätte, gäbe es keine Verschiebung gegenüber tr, Q3, st. 1, es läge jedoch eine geringere Amplitude vor und so weiter.

Dies macht es - zusammen mit dem Wissen darüber, das Antwortsignal welches Qubits Q1 bis Q3 wie stark verzögert ist, mit anderen Worten der Zeitlage der einzelnen Antwortsignale zueinander - möglich, von dem Verlauf des gemeinsamen Antwortsignals auf die Zustände aller drei Qubits Q1 bis Q3 rückschließen zu können. Dies auf alle möglichen Zustandskombinationen.

Es sei betont, dass die Anzahl von drei Qubits hier wieder nur beispielhaft zu verstehen ist und das Konzept gleichermaßen auf eine andere Anzahl von Qubits angewendet werden kann.

Man kann auch sagen, dass jeder Punkt auf dem gemeinsamen Antwortsignal, insbesondere jeder Samplingpunkt dieses, durch den aktuellen Zustand aller n Qubits mit 2n möglichen Werten definiert. Für N Samplingpunkte kann man ein Array mit N*2n möglichen Werten erhalten.

Dabei ist es prinzipiell möglich, für die Zustandsbestimmung auf verschiedene Merkmale des gemeinsamen Antwortsignals abzustellen. Rein beispielhaft sei genannt, dass ermittelt wird, welche Amplitude am höchsten Punkt des in Figur 4 ganz linken positiven Peaks (in Figur 4 ganz linker nach unten geöffneter Wellenbauch) liegt und von diesem Amplitudenwert darauf geschlossen wird, in welchem Zustand sich die drei Qubits jeweils befinden bzw. befanden.

Natürlich können auch die Amplituden am höchsten/tiefsten Punkt mehrerer Peaks ermittelt und hierfür herangezogen werden.

Alternativ oder zusätzlich kann auch auf einen oder mehrere Nulldurchgänge (steigender und/oder fallender Flanken) des gemeinsamen Antwortsignales abgestellt werden, insbesondere auf die Zeitlagen eines oder mehrerer Nulldurchgänge. In der Figur 4 sind rein beispielhaft sechs Nulldurchgänge (der jeweils steigenden Flanken) von dem gemeinsamen Antwortsignal tr, Q3, st. 1 und von dem gemeinsamen Antwortsignal tr, Q3, st. 0 mit diagonalen Linien markiert. Zwei von den sechs Nulldurchgängen sind beispielhaft im z. c. 110 (also zu tr, Q3, st. 0 gehörend) und z. c. 111 (also zu tr, Q3, st. 1 gehörend) dargestellt. Wie man erkennt, unterscheiden sich die beiden Nulldurchgänge der steigenden Flanken für die beiden Zustandskombinationen 110 und 111 was deren Zeitlagen, also deren Position auf der X-Achse, angeht.

Für die Ermittlung können insbesondere geeignete Samplingraten gewählt werden.

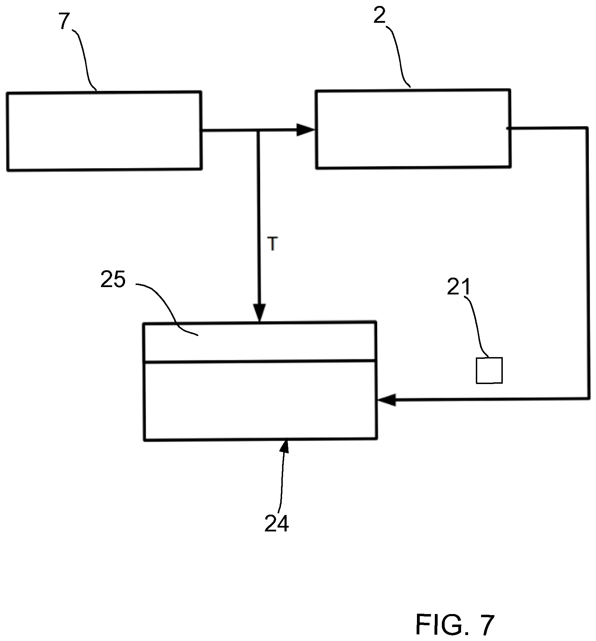

Es ist auch möglich, immer nur eine limitierte Anzahl definierter Samplingpunkte zu messen. Dies insbesondere, wenn man eine hochsynchronisierte Variante nutzt, bei welcher eine gemeinsame Ausleseeinrichtung zur Erfassung des gemeinsamen Antwortsignals, z.B. ein ADC, mit dem Probenpuls 7 bzw. in Abhängigkeit von diesem synchronisiert, insbesondere getriggert wird (vgl. auch Figur 7, auf die weiter unten näher eingegangen wird).

Rein beispielhaft sei genannt, dass ein erfasstes gemeinsames Antwortsignal vorliegt, beispielsweise in Form von den Werten von N Samplingpunkten. Diese N Samplingpunkte können dann zum Beispiel auch mit anderen möglichen Kombinationen eines N*2n Arrays verglichen und die Qubit-Zustandskombination durch Best-Fit-Methoden ermittelt werden.

Auch ist es möglich, dass eine künstliche Intelligenz, beispielsweise wenigstens ein neuronales Netz, für die bzw. im Rahmen der Analyse eines gemeinsamen Antwortsignales 21 zum Erhalt der Informationen über die Zustände der mehreren Qubits Q1-Q4 genutzt wird.

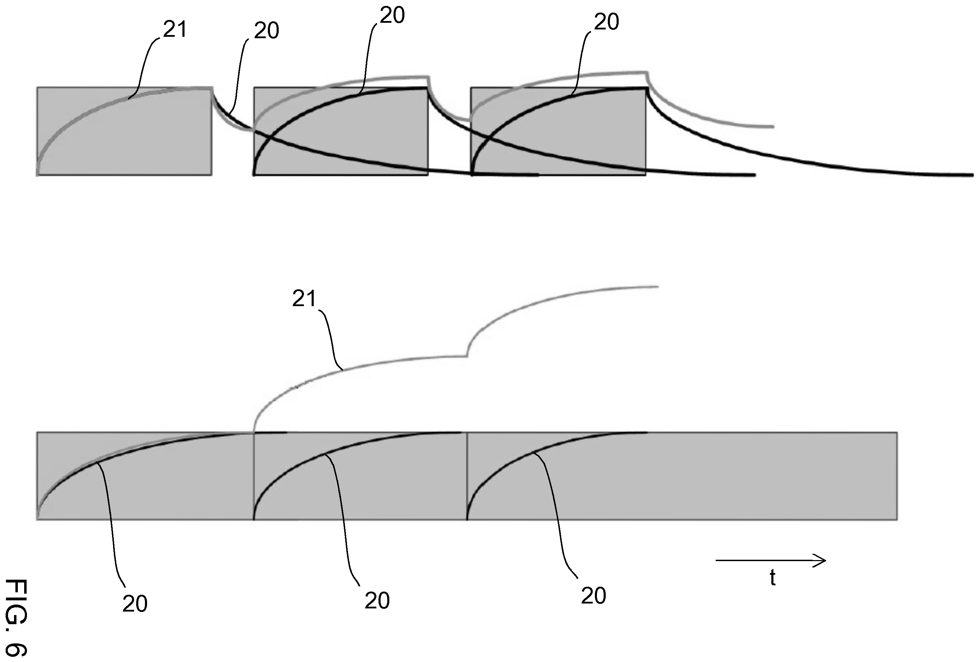

Es sei angemerkt, dass es grundsätzlich sowohl möglich ist, dass die Verzögerungen, welche den Antwortsignalen 20 auferlegt werden, bzw. die Verzögerung jeweils zwischen zwei aufeinanderfolgenden Antwortsignalen 20, kleiner sind bzw. ist, als die Dauer des Probesignals 7 bzw. der Antwortsignale 20, als auch umgekehrte. Beides ist stark vereinfacht und rein schematisch in Figur 6 dargestellt. Darin gezeigt sind unterschiedlich stark verzögerten Antwortsignale 20, die von verschiedenen Qubits Q1-Qn stammen, und das aufsummierte gemeinsame Antwortsignal 21. Oben für den Fall, dass die Verzögerung zwischen aufeinanderfolgenden Antwortsignalen 20 die Dauer von Probensignal 7 bzw. Antwortsignalen 20 überschreitet und unten für den Fall, dass die Verzögerung kleiner bzw. kürzer ist.

Die Figur 2 zeigt, wie oben angemerkt, ein zweites Ausführungsbeispiel eines erfindungsgemäßem Quantencomputers 1, mit dem das erfindungsgemäße Verfahren durchgeführt werden kann. Der Quantencomputer 1 aus Figur 2 stimmt weiten Teilen mit dem Beispiel aus Figur 1 überein.

Ein Unterschied besteht darin, dass dem in Figur 2 obersten Qubit Q1 keine Verzögerungseinrichtung 19 zugeordnet ist, mit anderen Worten nicht für jedes der vier Qubits Q1-Q4 eine solche vorgesehen ist, sondern nur für die Qubits Q2, Q3 und Q4. Dies, da ein Antwortsignal 20 prinzipiell auch unverzögert blieben kann (siehe ebenfalls Figur 3). Ein weiterer Unterschied des Ausführungsbeispiels gemäß Figur 2 besteht darin, dass wenigstens eine der Verzögerungseinrichtungen 19 verwendet wird, um die Antwortsignale 20 von mehreren Qubits Q1-Q4 zu verzögern. Wie man in der Figur erkennt, gilt dies sowohl für die obere Verzögerungseinrichtung 19, die dem Qubit Q2 zugeordnet und dessen Antwort-Schaltung 5 unmittelbar nachgeschaltet ist, als auch für die mittlere Verzögerungseinrichtung 19, die der Antwortschaltung 5 des dritten Qubits Q3 unmittelbar nachgeschaltet und diesem zugeordnet ist. Antwortsignale 20, die von dem Qubit Q4 stammen durchlaufen nacheinander alle drei Verzögerungseinrichtungen 19, Antwortsignale 20 von dem Qubit Q3 nur die mittlere und obere und Antwortsignale von dem Qubit Q2 nur die obere. Die Anordnung ist entsprechend getroffen bzw. die Schaltung entsprechend ausgeführt. Man kann auch sagen, die Verzögerungseinrichtungen 19 sind in einer Art Kaskade angeordnet. Antwortsignale des Qubits Q1 durchlaufen keine der dreie Verzögerungseinrichtungen 19.

Wenn die Antwortsignale 20 jeweils unterschiedlich viele Verzögerungseinrichtungen 19 durchlaufen (in Figur 2 0, 1, 2 oder 3), können die Verzögerungseinrichtungen 19 auch ausgebildet sein, um jeweils die gleiche Verzögerung zu bedingen. Rein beispielhaft sei genannt, dass jede der Verzögerungseinrichtungen 19 eine Verzögerung von einer halben Nanosekunde oder einer Nanosekunde bedingen kann, dies insbesondere aufgrund des Signal-Laufweges durch diese. Die Verzögerungseinrichtungen 19 können z.B. alle durch Leiterbahnen der gleichen Länge gegeben sein. Die Verzögerungen können gleich sein, da sich der Unterschied aus der abweichenden Anzahl ergibt.

Als besonders vorteilhaft hat es sich ferner erwiesen, wenn eine Synchronisation zwischen dem Senden des Probenpulses 7 und dem Auslesen der Antwortsignale 20 bzw. des gemeinsamen Antwortsignals 21 erfolgt. Die Verzögerung zwischen diesen beiden Ereignissen steht fest. Jeder Messzyklus wird von einem Leerlauf (" idle") für die Bitmanipulation gefolgt. Dies bedeutet, dass eine für das Auslesen des gemeinsamen Antwortsignals 21 verwendete gemeinsame Ausleseeinrichtung, beispielsweise wenigstens ein ADC einer solchen, von dem System getriggert werden kann. Dann wird es insbesondere möglich, dass die Samplingpunkte auf dem gemeinsamen Antwortsignal (vgl. die Samplingpunkte in den Figuren 3 und 4) )nicht zufällig positioniert sind, sondern immer mit dem gleichen Zeit-Offset in Bezug auf den Start des gemeinsamen Antwortsignals. Dies bedeutet, dass die Samplingrate viel niedriger sein, die Samplingperiode insbesondere auf z.B. 1 ns ansteigen kann.

Es ist auch möglich, im Rahmen der Erfindung ein Zeitstreckverfahren (englisch: time stretching method) zu nutzen, um die Samplingkapazitäten zu reduzieren.

Auch kann vorgesehen sein, dass wenigstens ein Domino-Sampling-Chip (DSC) bzw. wenigstens einen Domino-Sampling-Chip (DSC) Ring 24 zum Einsatz kommt, wie es rein schematisch in Figur 7 angedeutet ist. Ein solcher DSC 24 kann Bestandteil einer gemeinsamen Ausleseeinrichtung sein oder eine solche bilden. Dieser kann auch einen Trigger T in Abhängigkeit des Probensignals 7 erhalten, wie in der Figur angedeutet. Mit der Bezugsziffer 25 ist in Figur 7 ein analoger Speicherstart des DCS Rings 24 bezeichnet. Ebenfalls in dieser Figur erkennbar ist der Qubitchip 2 und das gemeinsamen Antwortsignal 21, welches dem getriggerten DSC Ring 24 zugeführt wird. Aufgrund des erfindungsgemäß vorgesehenen Zeitmultiplexings mit den Verzögerungseinrichtungen 19 wird es möglich, auf die Nutzung unterschiedlicher Frequenzen für verschiedene Qubits Q1-Qn und Antwort-Resonatoren 4 verschiedener Resonanzfrequenzen für die verschiedenen Qubits Q1-Qn zu verzichten. Es kann ein gemeinsames Probensignal 7 für die mehreren Qubits Q1-Qn genutzt werden, welches im Vergleich zu dem im Rahmen des FDM-basierten Ansatzes erforderlichen Probensignal deutlich schmalbandiger ist. Es kann ein einziger Mikrowellen-Ton f1 oder das gleiche schmale Spektrum für alle Qubits Q1-Qn zum Einsatz kommen. Die Unterscheidung der Antwortsignale 20 nach den einzelnen Qubits Q1-Qn erfolgt erfindungsgemäß nicht mittels unterschiedlicher Frequenzen, sondern durch das Zeitmultiplexing.

## Patentansprüche

1. Verfahren zum Auslesen der Zustände mehrerer Qubits (Q1-Qn), insbesondere supraleitender Qubits und/oder Spin-Qubits, wobei den Qubits (Q1-Qn) für das Auslesen der Zustände das gleiche Probensignal (7) über eine gemeinsame Probenleitung (8) zugeführt wird, und wobei jedem Qubit (Q1-Qn) eine eigene, bevorzugt einen Antwort-Resonator (4) aufweisende Antwort-Schaltung (5) zugeordnet ist, und wobei in Reaktion auf das zugeführte Probensignal (7) über die jeweilige Antwort-Schaltung (5) ein Antwortsignal (20) mit einer Information über den Zustand des jeweiligen Qubits (Q1-Qn) ausgegeben wird, **dadurch gekennzeichnet, dass** das Antwortsignal (20) wenigstens eines Qubits (Q1-Qn) gegenüber dem Antwortsignal (20) wenigstens eines weiteren Qubits (Q1-Qn) verzögert wird.

2. Verfahren nach Anspruch 1, **dadurch gekennzeichnet, dass** die Antwortsignale (20) der Qubits (Q1-Qn) zeitvariabel sind und die Verzögerung des Antwortsignals des wenigstes einen Qubits (Q1-Qn) unter Aufrechterhaltung des zeitvariablen Charakters erfolgt, und/oder dass die Verzögerung des Antwortsignals (20) des wenigstens einen Qubits (Q1-Qn) mit wenigstens einer der Antwort-Schaltung (5) des wenigstens einen Qubits (Q1-Qn) zugeordneten und/oder insbesondere direkt nachgeschalteten Verzögerungseinrichtung (19) erzielt wird.

3. Verfahren nach Anspruch 1 oder 2, **dadurch gekennzeichnet, dass** alle Antwortsignale (20) unterschiedlich stark verzögert werden.

4. Verfahren nach Anspruch 1 oder 2, **dadurch gekennzeichnet, dass** genau ein Antwortsignal (20) nicht verzögert wird und die verbleibenden Antwortsignale (20) unterschiedlich stark verzögert werden.

5. Verfahren nach einem der vorhergehenden Ansprüche, **dadurch gekennzeichnet, dass** von verschiedenen Qubits (Q1-Qn) stammende Antwortsignale (20) verschieden viele Verzögerungseinrichtungen (19) durchlaufen, und/oder dass wenigstens eine der Verzögerungseinrichtungen (19) verwendet wird, um die Antwortsignale (20) von mehreren Qubits (Q1-Qn) zu verzögern.

6. Verfahren nach einem der vorhergehenden Ansprüche, **dadurch gekennzeichnet, dass** die Antwortsignale (20) der mehreren Qubits (Q1-Qn) zum Erhalt eines gemeinsamen Antwortsignals (21) zusammengeführt, insbesondere aufsummiert werden, bevorzugt innerhalb eines auch die Qubits (Q1-Qn) umfassenden Qubitchips (2) und/oder unter Nutzung einer passiven oder aktiven Schaltung.

7. Verfahren nach Anspruch 6, **dadurch gekennzeichnet, dass** das gemeinsame Antwortsignal (21) zur weiteren Verarbeitung einer gemeinsamen Ausleseeinrichtung zugeführt wird, bevorzugt über eine gemeinsame Übertragungsleitung, und/oder, dass das gemeinsame Antwortsignal (21) in der Zeitdomäne ausgewertet wird.

8. Verfahren nach Anspruch 6 oder 7, **dadurch gekennzeichnet, dass** das gemeinsame Antwortsignal (21) analysiert wird, um Informationen über die Zustände der mehreren Qubits (Q1-Qn) zu erhalten, bevorzugt, wobei eine insbesondere digitalisierte Front (23) des gemeinsamen Antwortsignales (21) analysiert wird, um die Informationen über die Zustände der mehreren Qubits (Q1-Qn) zu erhalten.

9. Verfahren nach Anspruch 8, **dadurch gekennzeichnet, dass** wenigstens eine Amplitude und/oder wenigstens ein Nulldurchgang des gemeinsamen Antwortsignals (21), insbesondere die Zeitlage wenigstens eines Nulldurchgangs des gemeinsamen Antwortsignals, und/oder die Zeitlage wenigstens eines in dem gemeinsamen Antwortsignal (21) enthaltene Peaks ermittelt wird, um die Informationen über die Zustände der mehreren Qubits (Q1-Qn) zu erhalten.

10. Verfahren nach Anspruch 7 oder einem der Ansprüche 8 oder 9, soweit auf Anspruch 6 rückbezogen, **dadurch gekennzeichnet, dass** das Probensignal (7) für die Triggerung der gemeinsamen Ausleseeinrichtung verwendet wird.

11. Verfahren nach einem der vorhergehenden Ansprüche, **dadurch gekennzeichnet, dass** für die Erzeugung des Probensignals und für die Ausleseeinrichtung, insbesondere für einen Analog-Digital-Wandler dieser, die gleiche Clockquelle genutzt wird, und/oder dass die zu verschiedenen Qubits (Q1-Qn) gehörigen Antwortsignale (20) für gleiche Qubit-Zustände die gleichen Frequenzkomponenten aufweisen.

12. Verfahren nach einem der vorhergehenden Ansprüche, **dadurch gekennzeichnet, dass** die Antwort-Schaltungen (5) der Qubits (Q1-Qn) jeweils einen Antwort-Resonator (4) umfassen, insbesondere, wobei die Antwort-Resonatoren (4) der verschiedener Qubits (Q1-Qn) hinsichtlich ihrer Resonanzfrequenz übereinstimmen, bevorzugt, wobei die Antwort-Resonatoren (4) verschiedener Qubits (Q1-Qn) baugleich ausgebildet sind, und/oder dass das Antwortsignal (20) wenigstens eines Qubits (Q1-Qn) gegenüber dem Antwortsignal (20) wenigstens eines weiteren Qubits (Q1-Qn) um 0,5 ns bis 10 ns verzögert wird.

13. Auslesevorrichtung zur Durchführung des Verfahrens nach einem der Ansprüche 1 bis 12, umfassend mehrere bevorzugt einen Antwort-Resonator (4) aufweisende Antwort-Schaltungen (5), die jeweils mit einem Qubit (Q1-Qn) verbunden oder verbindbar sind, und wenigstens eine Verzögerungseinrichtung (19), die wenigstens einer Antwort-Schaltung (5) zugeordnet und/oder insbesondere direkt nachgeschaltet ist und ein von der wenigstens einen Antwort-Schaltung (5) ausgegebenes Antwortsignal (20), das eine Information über den Zustand eines Qubits (Q1-Qn) enthält, verzögern kann.

14. Auslesevorrichtung nach Anspruch 13, **dadurch gekennzeichnet, dass** die wenigstens eine Verzögerungseinrichtung (19) derart ausgebildet und/oder eingerichtet ist, dass sie ein zeitvariables Antwortsignal (20) unter Aufrechterhaltung seines zeitvariablen Charakters verzögern kann, und/oder dass die wenigstens eine Verzögerungseinrichtung (19) ausgebildet und/oder eingerichtet ist, um eine feste Verzögerung zu bewirken,
und/oder dass mehrere Verzögerungseinrichtungen (19) vorgesehen sind, bevorzugt, wobei verschiedene Verzögerungseinrichtungen (19) verschieden lange Verzögerungen von Qubit-Antwortsignalen (20) bedingen können, und/oder wobei die Auslesevorrichtung derart ausgebildet ist, dass von verschiedenen Qubits (Q1-Qn) stammende Antwortsignale (20) verschieden viele Verzögerungseinrichtungen (19) durchlaufen,
und/oder dass die Auslesevorrichtung derart ausgebildet ist, dass wenigstens einer der Verzögerungseinrichtungen (19) die von wenigstens zwei verschiedenen Antwort-Schaltungen (5) ausgegebenen, zu wenigstens zwei verschiedenen Qubits (Q1-Qn) gehörigen Antwortsignale (20) zugeführt werden.

15. Auslesevorrichtung nach einem der Ansprüche 13 oder 14, **dadurch gekennzeichnet, dass** die Antwort-Schaltungen (5) jeweils einen Antwort-Resonator (4) aufweisen, insbesondere, wobei die Antwort-Resonatoren (4) verschiedener, bevorzugt aller Antwortschaltungen (5) hinsichtlich ihrer Resonanzfrequenz übereinstimmen, bevorzugt, wobei die Antwort-Resonatoren (4) verschiedener, bevorzugt aller Antwortschaltungen (5) baugleich ausgebildet sind.

16. Quantencomputer (1) umfassend wenigstens eine Auslesevorrichtung nach einem der Ansprüche 13 bis 15 und mehrere Qubits (Q1-Qn), insbesondere supraleitende Qubits und/oder Spin-Qubits.
